# EUROPEAN PATENT SPECIFICATION

(11) **EP 3 402 359 B1**
(45) Date of publication and mention of the grant of the patent: **12.05.2021**
(21) Application number: 17703520.1
(22) Date of filing: 13.01.2017
(51) Int. Cl.: A43B 13/02, A43B 13/12, A43B 5/02, B29D 35/00, B29D 35/14, A43B 13/14

(54) **SOLE STRUCTURE FOR AN ARTICLE OF FOOTWEAR, COMPRISING AN OUTER SOLE COMPONENT WITH A CO-MOLDED FLEX MODIFIER COMPONENT, AND METHOD OF MAKING SAID SOLE STRUCTURE**
SOHLENSTRUKTUR FÜR EINEN SCHUHARTIKEL MIT EINER ÄUSSEREN SOHLENKOMPONENTE MIT EINER MITGEFORMTEN FLEXIBLEN MODIFIKATORKOMPONENTE UND VERFAHREN ZUR HERSTELLUNG DER SOHLENSTRUKTUR
STRUCTURE DE SEMELLE POUR UN ARTICLE CHAUSSANT, COMPORTANT UN COMPOSANT FORMANT SEMELLE EXTÉRIEURE AVEC UN COMPOSANT FORMANT MODIFICATEUR DE FLEXION CO-MOULÉ, ET PROCÉDÉ DE FABRICATION DE LADITE STRUCTURE DE SEMELLE

(30) Priority: 13.01.2016 US 201614994494
(43) Date of publication of application: 21.11.2018
(73) Proprietor: Nike Innovate C.V., Beaverton, Oregon 97005 (US)
(72) Inventor: HAUGBRO, Gjermund, Beaverton, Oregon 97005 (US); KAEUFER, Bernhard, Beaverton, Oregon 97005 (US)
(74) Representative: Müller-Boré & Partner Patentanwälte PartG mbB
(86) International application number: PCT/US2017/013385
(87) International publication number: WO 2017/123909

(56) References cited:
- EP-A1- 0 724 952
- GB-A- 2 256 784
- US-A1- 2002 092 207
- US-A1- 2005 160 630
- US-A1- 2012 180 343
- US-A1- 2014 026 441

## Description

### CROSS REFERENCE TO RELATED APPLICATIONS

This application claims priority to U.S. Application Serial No. 14/994,494, filed January 13, 2016.

### FIELD OF THE INVENTION

The present embodiments generally relate to articles of footwear. More particularly, the present embodiments relate to an outer sole component for a footwear sole structure.

### BACKGROUND

Articles of footwear generally include an upper and a sole structure. An upper generally forms a footwear body that extends over a portion of a foot to retain the article of footwear on the foot. An upper may extend over an instep and toe area of the foot, along medial and lateral sides of the foot, and/or around a heel area of the foot. An upper may be formed from one or more material elements, such as textiles, polymer sheet layers, foam layers, leather, synthetic leather, and other materials. These materials may be attached together, such as by stitching or adhesive bonding. An upper may be configured to form an interior of the footwear that comfortably and securely receives a foot. An upper may include an opening that facilitates entry and removal of the foot from the interior of the upper, and further may include a closure or fastening system, such as lacing, cinches, or straps, to adjust a fit of the article of footwear.

A sole structure generally is attached to the upper and disposed between the foot and a ground surface. For example, a sole structure may be attached to a lower portion of the upper. A sole structure may include one or more components, including one or more outer sole component, midsole component, insole, insert, bladder or fluid-filled chamber, such as an airbag, or other sole component. A sole structure also may include other components, elements, or features, such as ground surface traction elements.

An upper and sole structure may operate to provide a comfortable article of footwear structure configured to benefit a wearer engaged in any of a variety of activities. A sole structure may operate to attenuate impact and ground reaction forces and/or to provide traction on a ground surface. An upper and sole structure may cooperate to control various foot motions, such as pronation

European Patent Application No. 0 724 952 A1 discloses a sole for sports shoes, the sole comprising a sole body formed of recycled polyamide-based plastic material, the sole body having a ground-engaging surface and an inner surface. A fibre-reinforced cover layer is fusion bonded with the inner surface of the sole body. This document also discloses an article of footwear comprising an upper and said sole structure, and a method of making said sole structure.

The invention is defined by the appended independent claims. Preferred embodiments are specified in the dependent claims.

### BRIEF DESCRIPTION OF THE DRAWINGS

Embodiments may be better understood with reference to the following drawings and detailed description. Elements, components, and features of the embodiments in the figures are not necessarily drawn to scale, emphasis instead being placed upon illustrating principles of the embodiments disclosed. In the figures, like reference numerals designate like or corresponding parts or features throughout the different views, with the initial digit(s) of each reference numeral indicating a figure in which the reference numeral first appears.
FIG. 1 is a schematic diagram illustrating a side perspective view of an embodiment of an article of footwear having a sole structure including an outer sole component with a co-molded flex modifier component;
FIG. 2 is a schematic diagram illustrating an exploded side perspective view of the article of footwear of FIG. 1;
FIG. 3 is a schematic diagram illustrating an exploded perspective view of an embodiment of a flex modifier material and a removing device for removing a flex modifier component from the flex modifier material in a removing process;
FIG. 4 is a schematic diagram illustrating a plan view of an embodiment of a flex modifier component formed from the flex modifier material of FIG. 3;
FIG. 5 is a schematic diagram illustrating a cross-sectional view of the flex modifier component of FIG. 4, taken along section line 5-5 of FIG. 4;
FIG. 6 is a schematic diagram illustrating a perspective view of an embodiment of a molding system for molding an outer sole component with a co-molded flex modifier component, with the molding system in an open, pre-molding state;
FIG. 7 is a schematic diagram illustrating a perspective view of the molding system of FIG. 6 in a closed, molding state;
FIG. 8 is a schematic diagram illustrating a perspective view of the molding system of FIG. 6 in an open, post molding state;
FIG. 9 is a schematic diagram illustrating a top plan view of an embodiment of a molded sole structure including an outer sole component with a co-molded flex modifier component, prior to a finishing process;
FIG. 10 is a schematic diagram illustrating a top plan view of a molded sole structure including an outer sole component with a co-molded flex modifier component;
FIG. 11 is a schematic diagram illustrating a cross-sectional view of the sole structure of FIG. 10, taken along section line 11-11 of FIG. 10;
FIG. 12 is a schematic diagram illustrating a side perspective view of an embodiment of a sole structure including an outer sole component with a co-molded flex modifier component, with the sole structure in a flexed configuration;
FIG. 13 is a flow diagram illustrating an embodiment of processes for making a flex modifier component; and
FIG. 14 is a flow diagram illustrating an embodiment of processes for making a sole structure for an article of footwear including an outer sole component with a co-molded flex modifier component.

### DETAILED DESCRIPTION

The following description and accompanying figures disclose embodiments of sole structures for articles of footwear incorporating an outer sole component with a co-molded flex modifier component. Features and concepts related to the footwear, and more particularly to the sole structure including an outer sole component with a co-molded flex modifier component, are disclosed with reference to athletic footwear having a configuration that is suitable for a soccer cleat. The embodiments are not limited to athletic footwear configured for a soccer cleat, however, and may be applied to a wide range of footwear styles. For example, features and concepts of the embodiments may be applied to other athletic footwear, including basketball shoes, cross-training shoes, walking shoes, tennis shoes, running shoes, hiking boots, and other athletic footwear. Features and concepts of the embodiments also may be applied to non-athletic footwear styles, including dress shoes, loafers, sandals, work boots, and other non-athletic footwear. One skilled in the art will appreciate that features and concepts of the disclosed embodiments may apply to a wide variety of footwear styles, in addition to the specific styles discussed in the following description and depicted in the accompanying figures.

Sole structures according to embodiments described herein may provide desired improvements in one or more performance characteristics of athletic footwear or other articles of footwear. For example, a sole structure including an outer sole component with a co-molded flex modifier component may provide a desired rigidity or flex characteristic and attenuate impact and ground reaction forces and other forces. A sole structure including an outer sole component with a co-molded flex modifier component may be combined with other components, such as a midsole component formed of a foam material, to provide a comfortable fit, e.g., by conforming to various contours of the foot, with a desired rigidity or flex characteristic and response to impact and ground reaction forces, and to provide a range of customization in a sole structure and article of footwear. Embodiments described herein may provide improvements in small sized footwear, such as junior or women's footwear, including football or soccer cleats. Embodiments herein may provide customization, e.g., player- or position-specific rigidity and/or flex characteristics, in an outer sole component and article of footwear, that may be selected (i.e., customized) during manufacture. Embodiments described herein may facilitate efficient and/or cost effective manufacture of such sole structures and articles of footwear.

In one aspect, a sole structure for an article of footwear includes an outer sole component formed of a first mold material, the outer sole component having an exposed or bottom surface configured to engage a ground surface and an interior or top surface opposite the exposed surface, and a flex modifier component formed of a fiber material and a second mold material, the flex modifier component being co-molded with the outer sole component at the interior surface of the outer sole component.

In some embodiments, the flex modifier component may have a multi-layer construction that includes at least a first layer formed of fiber material. In some embodiments, the fiber material may be a non-woven fiber fabric or mat material. In some embodiments, the fiber material may be impregnated with a polymer material, such as a styrene-coated polymer material, and in some embodiments, the polymer material may be mold compatible with the first mold material of the outer sole component. In some embodiments, the fiber material may be a fusion-bonded non-woven fabric material. In some embodiments, the multi-layer construction may include an extruded hot melt film sandwiched between fiber fabric material layers. For example, in some embodiments the flex modifier component may be an extruded thermoplastic hot melt film sandwiched between fusion bonded non-woven fabric, impregnated with a styrene-coated polymer. In some embodiments, the flex modifier component may be co-molded with the outer sole component so that mold material of the flex modifier component naturally fuses or blends with a rubber compound of the outer sole component and creates a chemical and mechanical bond.

In some embodiments, a configuration, location, and/or orientation of the flex modifier component may be selected to cooperate with a configuration of the outer sole component to selectively modify a flex characteristic of the outer sole component substantially only at a selected location of the outer sole component corresponding to the location of the flex modifier component, e.g., to control natural flex and motion of an article of footwear. In some embodiments, the flex modifier component may be an elongated shank. In some embodiments, the elongated shank may extend through a midfoot region generally from a heel region to a forefoot region of the outer sole component. In accordance with the invention, the elongated shank is generally rectangular. In accordance with the invention, the elongated shank has an extended portion or projection, e.g., a portion at a longitudinal end of the elongated shank may be configured to extend or project within a region located between a plurality of traction elements arranged in a pattern on the exposed surface of the outer sole component, such as in the heel region of the outer sole component. Such selective modification may be implemented in manufacturing to provide variability and customization in performance characteristics, e.g., for player- or position-specific performance characteristics.

In another aspect, an article of footwear includes an upper and a sole structure associated with the upper, the sole structure including an outer sole component formed of a first mold material, the outer sole component having an exposed surface configured to engage a ground surface and an interior surface opposite the exposed surface, and a flex modifier component formed of a fiber material and a second mold material, the flex modifier component being co-molded with the outer sole component at the interior surface of the outer sole component.

In some embodiments, the sole structure of the article of footwear may include a midsole component disposed between the upper and the outer sole component with the co-molded flex modifier component.

In another aspect, a method of making a sole structure for an article of footwear includes disposing an outer sole component blank of a first mold material in a mold cavity of a molding system that is configured to correspond with an outer sole component, disposing a flex modifier component that includes a fiber material and a second mold material on an exposed upper surface of the outer sole component blank, and co-molding the outer sole component blank and the flex modifier component in the molding system to form the outer sole component, with the co-molded flex modifier component located at an interior surface of the outer sole component.

In another aspect, a method of making a flex modifier component includes preparing a flex modifier material and forming a flex modifier component from the flex modifier material. In some embodiments, the method may include preparing a multi-layer sheet of flex modifier material, such as an extruded thermoplastic hot melt film sandwiched between fusion bonded non-woven fiber fabric material impregnated with a styrene-coated polymer. The flex modifier component may be formed from the flex modifier material by a removing process, such as a cutting or stamping process, using a removing device, such as a stamp, a punch, or a cookie cutter device.

Each of the above aspects, embodiments, and features may improve at least one performance characteristic of a sole structure of an article of footwear. In particular, these aspects, embodiments, and features, alone and/or in combination, variously may provide a desired rigidity or flex characteristic in a sole structure and article of footwear. These aspects, embodiments, and features further may facilitate a smooth response characteristic in a sole structure of an article of footwear, where localized bending of the sole structure occurs smoothly and without buckling. Further, these aspects, embodiments, and features variously may be combined with one another and/or with other features to improve overall performance of a sole structure and article of footwear.

Other systems, methods, aspects, features, and advantages of embodiments will be, or will become, apparent to one of ordinary skill in the art upon examination of the figures and this detailed description. It is intended that all such additional systems, methods, aspects, features, and advantages be included within this description, be within the scope of the embodiments, and be protected by the following claims.

### Article of Footwear Features

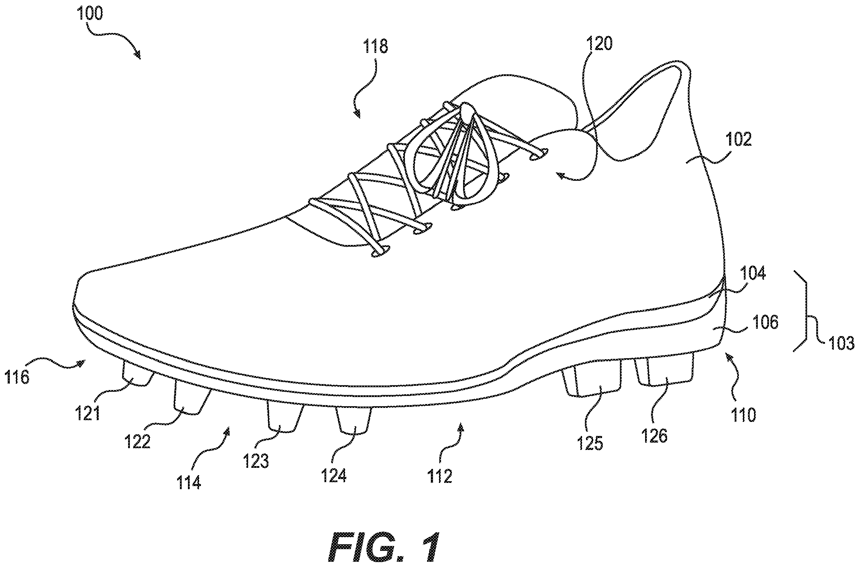

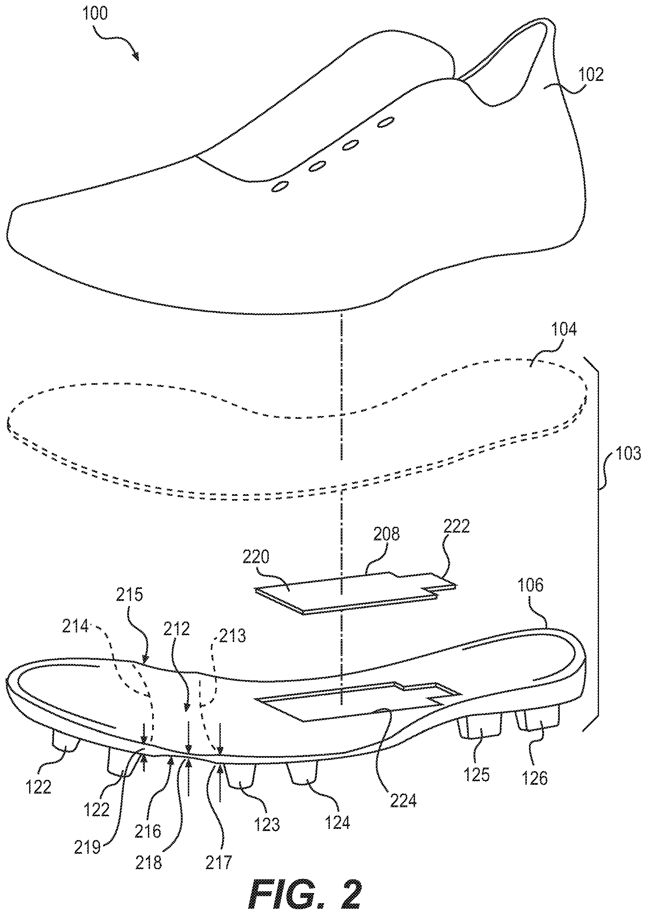

FIGS. 1 and 2 illustrate an embodiment of an article of footwear 100. FIG. 1 is a lateral side perspective view of article of footwear 100, and FIG. 2 is an exploded lateral side perspective view of article of footwear 100. As shown in FIGS. 1 and 2, article of footwear 100 generally includes an upper 102 and a sole structure 103. As shown in FIGS. 1 and 2, in some embodiments sole structure 103 may include an optional midsole component 104, an outer sole component 106, and a flex modifier component 208.

Referring to FIG. 1, article of footwear 100 generally includes a heel region 110, a mid-foot region 112, and a forefoot region 114 including a toe region 116. Article of footwear 100 generally includes a medial side 118 and a lateral side 120. In this disclosure and the claims, reference to heel region 110, mid-foot region 112, forefoot region 114, toe region 116, medial side 118, and lateral side 120 does not refer to exact structure(s) or boundaries, but rather generally designates regions or areas of article of footwear 100. In some aspects, these regions or areas may overlap. It will be appreciated that reference to heel region 110, mid-foot region 112, forefoot region 114, toe region 116, medial side 118, and lateral side 120 also may apply to various elements or components of article of footwear 100, such as upper 102, sole structure 103, optional midsole component 104, outer sole component 106, and flex modifier component 208. Further, the term "lateral" may be used to describe a medial-lateral direction or orientation of article of footwear 100 or a component or portion of article of footwear 100. Similarly, the terms "rear," "front," "forward," "proximal," or "distal" may be used to describe a direction, orientation, or relative location, e.g., along a lateral direction from heel region 110 to toe region 116 of article of footwear 100 or a component or portion of article of footwear 100. Similarly, the term "vertical" may be used to describe a direction perpendicular to a ground surface when article of footwear 100 is disposed with sole structure 103 laying substantially flat on the ground surface. Those skilled in the art will be able to interpret these references and terms throughout the disclosure and claims based on the context in which these references and terms are used in the disclosure and claims.

A construction and configuration of upper 102 may vary in different embodiments. Upper 102 may have any construction and configuration suitable for a desired article of footwear. As shown in FIGS. 1 and 2, in some embodiments upper 102 may extend over toe region 116, forefoot region 114, an instep at midfoot region 112, along medial side 118, along lateral side 120, and around heel region 110. Upper 102 may include one or more material elements, such as textiles, foam materials, leather materials, and other known or later developed materials, that may be associated with one another, e.g., stitched or adhesively bonded together. One or more material elements may be manipulated or configured to form an interior of upper 102 for securely and comfortably receiving a foot. Those skilled in the art readily will be able to select a construction and configuration of upper 102 suitable for a desired application based on the present disclosure.

A construction and configuration of sole structure 103 may vary in different embodiments. Sole structure 103 may include plural components. As shown in FIGS. 1 and 2, in some embodiments sole structure 103 may include midsole component 104, outer sole component 106, and co-molded flex modifier component 208. In some embodiments, midsole component 104 may be optional. For example, in some embodiments sole structure 103 may include only outer sole component 106 and co-molded flex modifier component 208. Sole structure 103 may include an optional insole or inner sole (not shown), which may be a thin cushioning member typically located within the interior of upper 102 and adjacent to the foot to enhance the comfort of article of footwear 100. Those skilled in the art will appreciate alternative constructions and configurations for sole structure 103 suitable for a desired application consistent with descriptions of embodiments herein.

Sole structure 103 may be secured to upper 102 in various configurations in different embodiments. As shown in FIGS. 1 and 2, in some embodiments sole structure 103 may be secured to a lower surface of upper 102, such as by stitching or adhesive bonding. For example, in some embodiments outer sole component 106 may be secured to optional midsole component 104 and/or upper 102, such as by stitching or adhesive bonding. Those skilled in the art will appreciate alternative methods suitable for securing sole structure 103 to upper 102 consistent with descriptions of embodiments herein.

Sole structure 103 generally operates to attenuate impact and other ground reaction forces and absorb energy. Sole structure 103 may attenuate impact and other ground reaction forces and absorb energy as it contacts a ground surface or other surface, such as a ball or other equipment, during active use of article of footwear 100. In some embodiments, one or more of optional midsole component 104, outer sole component 106, and co-molded flex modifier component 208 of sole structure 103 may cooperate to attenuate impact and other ground reaction forces and absorb energy. In some embodiments, one or more of optional midsole component 104, outer sole component 106, and co-molded flex modifier component 208 of sole structure 103 may cooperate to provide one or more other performance characteristics of article of footwear 100, such as control of pronation. Those skilled in the art will appreciate alternative configurations of these elements for achieving these and other performance characteristics of sole structure 103 in view of discussion of these elements in this disclosure.

### Midsole Component Features

A construction and configuration of optional midsole component 104 may vary in different embodiments. As shown in FIGS. 1 and 2, in some embodiments midsole component 104 may be located below upper 102 and adjacent a foot when the foot is disposed in an interior of upper 102. In some embodiments, midsole component 104 may be secured to a lower portion of upper 102, e.g., by stitching or adhesive bonding. In some embodiments, midsole component 104 may be attached to a lower portion of upper 102 and an upper surface of outer sole component 106, e.g., by stitching or adhesive bonding. In some embodiments, midsole component 104 may include one or more elements. As shown in FIG. 2, in some embodiments midsole component 104 may be a single, one-piece midsole component or element. In some embodiments, midsole component 104 may be substantially planar. In some embodiments, midsole component 104 may have a shape (in plan view) that generally conforms to a foot or footprint. In some embodiments, one or more surface contours of midsole component 104 may be configured to generally conform to one or more contour of the foot, to provide a comfortable fit. Those skilled in the art will be able to select a configuration of midsole component 104, including at least shape and geometry, suitable for a desired application based on the present disclosure.

A construction of midsole component 104 may vary in different embodiments. Midsole component 104 generally may be made of any material suitable for use as a midsole. In some embodiments, midsole component 104 may provide the foot with cushioning during walking, running, or other activities. In some embodiments, midsole component 104 may be made of a foam material. It will be appreciated that foam material may beneficially compress resiliently under an applied load, e.g., to provide a desired absorption and/or dissipation of impact or other ground reaction forces. In some embodiments, midsole component 104 may be formed of a polymer foam material, such as polyurethane or ethylvinylacetate. In some embodiments, the polymer foam material may have an open cell foam construction; in some embodiments, the polymer foam material may have a closed cell foam construction. In some embodiments, midsole component 104 may be formed of a material that is mold compatible with, or otherwise suitable for attachment with, outer sole component 106 and/or flex modifier component 208, such as by adhesive or thermal bonding.

Midsole component 104 may be made by various processes in different embodiments. In some embodiments, midsole component 104 may be made by any manufacturing method or process suitable for making a foam material component. For example, in some embodiments midsole component 104 may be made by injection molding a polymer foam material. Those skilled in the art will appreciate alternative and additional materials and methods of making optional midsole component 104 suitable for a desired application based on the present disclosure.

### Outer Sole Component Features

A construction and configuration of outer sole component 106 may vary in different embodiments. As shown in FIGS. 1 and 2, outer sole component 106 may be disposed below upper 102 and optional midsole component 104. As shown in FIG. 2, in some embodiments outer sole component 106 may have a generally planar structure. As shown in FIG. 2, in some embodiments outer sole component 106 may have a general shape of a footprint. In some embodiments, e.g., in embodiments where optional midsole component 104 is not present, outer sole component 106 may have top surface contours that generally conform to features of a foot, e.g., to provide a comfortable fit. In some embodiments, a surface contour of at least a portion of a perimeter of outer sole component 106 may curl vertically upward, e.g., to conform to a curved surface contour of an outer perimeter of a lower portion of upper 102. In some embodiments, at least a portion of outer sole component 106, e.g., an outer perimeter portion, may be attached directly to a lower portion of upper 102, e.g., by stitching or adhesive bonding. In some embodiments, e.g., in embodiments where optional midsole component 104 is not present, a substantial entirety of a top surface of outer sole component 106 may be attached directly to a lower surface of upper 102, e.g., by stitching or adhesive bonding. As shown in FIGS. 1 and 2, outer sole component 106 generally may be disposed below upper 102 and configured to engage a ground surface and impart traction to article of footwear 100.

A construction of outer sole component 106 may vary in different embodiments. Outer sole component 106 may be formed of various materials in different embodiments. In some embodiments, outer sole component 106 may be formed of a durable, wear-resistant material that is configured to engage a ground surface and impart traction. In some embodiments, outer sole component 106 may be formed of a mold material, such as a rubber mold material or other mold material. In some embodiments, outer sole component 106 may be formed of more than one mold material. In some embodiments, outer sole component 106 may be formed of a mold material and another material, such as a filler material or insert. Those skilled in the art will appreciate various combinations of mold materials and optional other materials suitable for making outer sole component 106 based on the present disclosure.

Outer sole component 106 may include at least one traction element configured to engage a ground surface and impart traction. In some embodiments, at least one traction element may be integrally molded as a single piece with outer sole component 106. In some embodiments, one or more traction elements may be removably attached to an exposed surface of outer sole component 106, e.g., using a base member that may be threaded or otherwise suitably mated with a receiving structure of outer sole component 106. In some embodiments, outer sole component 106 may include a plurality of traction elements arranged on an exposed surface of outer sole component 106. In some embodiments, outer sole component 106 may include a plurality of different types of traction elements arranged in a pattern on an exposed surface of outer sole component 106. For example, as shown in FIGS. 1 and 2, in some embodiments outer sole component 106 may include at least one traction element located in toe region 116, such as conical-shaped cleat 121 and conical-shaped cleat 122. As shown in FIGS. 1 and 2, in some embodiments outer sole component 106 may include at least one traction element located in forefoot region 114, such as conical-shaped cleat 123 and conical-shaped cleat 124. As shown in FIGS. 1 and 2, in some embodiments outer sole component 106 may include at least one traction element located in heel region 110, such as blade cleat 125 and blade cleat 126. In some embodiments, one or more traction elements may be located in midfoot region 112. Those skilled in the art will appreciate other types of traction elements and locations or patterns of traction elements suitable for any desired application based on the present disclosure.

In some embodiments, outer sole component 106 may be configured with at least one flex structure or flex zone. For example, as shown in FIG. 2, in some embodiments outer sole component 106 may include flex structure or flex zone 212 located on an exposed bottom surface of outer sole component 106. In some embodiments, flex structure or flex zone 212 generally may be located in forefoot region 114, e.g., at a location corresponding to the metatarsals adjacent the balls of the feet. It will be appreciated that flex structure or flex zone 212 may facilitate desired localized bending or flexing of outer sole component 106 and sole structure 103 at flex structure or flex zone 212. Those skilled in the art will be able to select a location of flex structure or flex zone 212 suitable for a desired application based on the present disclosure.

A configuration of flex structure or flex zone 212 may vary in different embodiments. Flex structure or flex zone 212 may have any regular or non-regular shape or geometric configuration in plan view. In some embodiments, flex structure or flex zone 212 may have a generally rectangular shape in plan view. As shown in FIG. 2, in some embodiments flex structure or flex zone 212 may have a generally rectangular shape, e.g., generally defined between dashed line 213 and dashed line 214 in forefoot region 114. In some embodiments, one or more longitudinal or lateral side edges of flex structure or flex zone 212 may be curved. For example, as shown in FIG. 2, in some embodiments at least one of longitudinal sides of flex structure or flex zone 212, indicated at dashed line 213 and dashed line 214, may be arched inward. In some embodiments, a lateral width of flex structure or flex zone 212 may extend an entire width of outer sole component 106. In some embodiments, a lateral width of flex structure or flex zone 212 may extend only a portion of the width of outer sole component 106. Those skilled in the art will be able to select a configuration of flex structure or flex zone 212, including at least size and shape in plan view, suitable for providing desired bending or flex characteristics base on the present disclosure.

In some embodiments, flex structure or flex zone 212 may be formed by controlling a width profile of outer sole component 106. In some embodiments, a width profile of outer sole component 106 at flex structure or flex zone 212 may be smooth or gradual. For example, in some embodiments outer sole component 106 may have a first width at one longitudinal end of flex structure or flex zone 212 located more proximate heel region 110, e.g., at dashed line 213, a second width at a central location of flex structure or flex zone 212, and a third width at an opposite longitudinal end of flex structure or flex zone 212 more proximate the toe region 116, e.g., at dashed line 214. In some embodiments, outer sole component 106 may have a substantially parallel width profile at flex structure or flex zone 212, e.g., in which the first width, the second width, and the third width are substantially equal. In some embodiments, outer sole component 106 may have a smooth tapered width profile at flex structure or flex zone 212, e.g., in which the second width is less than at least one of the first width and the third width and at least one lateral side edge curves inward.

In some embodiments, a width profile of outer sole component 106 at flex structure or flex zone 212 may not be smooth or gradual. In some embodiments, a width profile at flex structure or flex zone 212 may be discontinuous or stepped, e.g., at dashed line 213 and/or at dashed line 214, at least on one of medial side 118 and lateral side 120. In some embodiments, flex structure or flex zone 212 may be formed by one or more notches or cut-out portions formed on at least one of opposing lateral side edges of article of footwear 100. For example, as shown in FIG. 2, in some embodiments outer sole component 106 may include flex structure or flex zone 212 formed by notched or cut-out portion 215 located on medial side 118 and notched or cut-out portion 216 located on lateral side 120 of article of footwear 100. In some embodiments, notched or cut-out portion 215 and notched or cut-out portion 216 may have substantially similar but opposing shapes, e.g., substantially mirror image shapes. In some embodiments, notched or cut-out portion 215 and notched or cut-out portion 216 may have different configurations. For example, in some embodiments notched or cut-out portion 215 and notched or cut-out portion 216 may have different sizes, different shapes, asymmetrical relative shapes, asymmetrical alignments, or other different configurations. Those skilled in the art will be able to select a configuration, including size and shape of any notched or cut-out portion(s) suitable for a desired application based on the present disclosure.

In some embodiments, a flex structure or flex zone 212 may be formed by controlling a thickness profile of outer sole component 106. As shown in FIG. 2, in some embodiments outer sole component 106 may have a reduced thickness profile at flex structure or flex zone 212, e.g., a reduced thickness relative to a thickness at at least one adjacent portion of outer sole component 106. For example, as shown in FIG. 2, in some embodiments outer sole component 106 may have a thickness profile at flex structure or flex zone 212 that tapers from a first thickness 217 at one longitudinal end of flex structure or flex zone 212 located at forefoot region 114 more proximate heel region 110 (e.g., at dashed line 213), down to a second thickness 218 at a central area of flex structure or flex zone 212, and then back up to a third thickness 219 at an opposite longitudinal end of flex structure or flex zone 212 at forefoot region 114 more proximate toe region 116 (e.g., at dashed line 214). With this configuration, in some embodiments the second thickness 218 may be less than at least one of the first thickness 217 and the third thickness 219. In some embodiments, thickness 219 may be less than thickness 217. In some embodiments, thickness 218 may be located at a midpoint of flex structure or flex zone 212, e.g., at a midpoint between dashed line 213 and dashed line 214. In some embodiments, thickness 218 may be a minimum thickness at flex structure or flex zone 212. For example, in some embodiments second thickness 218 may be approximately 50% of at least the greater of thickness 217 and/or thickness 219. In some embodiments, thickness 218 may be a minimum thickness of outer sole component 106. As shown in FIG. 2, in some embodiments a thickness profile of outer sole component 106 at flex structure or flex zone 212 may have a smooth or continuous surface contour or configuration. In some embodiments, however, a thickness profile of outer sole component 106 at flex structure or flex zone 212 may not have a smooth or continuous surface contour or configuration. In some embodiments, a thickness profile of outer sole component 106 at flex structure or flex zone 212 may have a discontinuous surface configuration, such as a stepped thickness profile. For example, in some embodiments flex structure or flex zone 212 may include a sipe, a channel, a slotted structure, or another stepped or discontinuous profile structure. Those skilled in the art will be able to select a thickness profile of outer sole component 106 at flex structure 212 suitable for achieving a desired bending or flex characteristic at flex zone 212 based on the present disclosure.

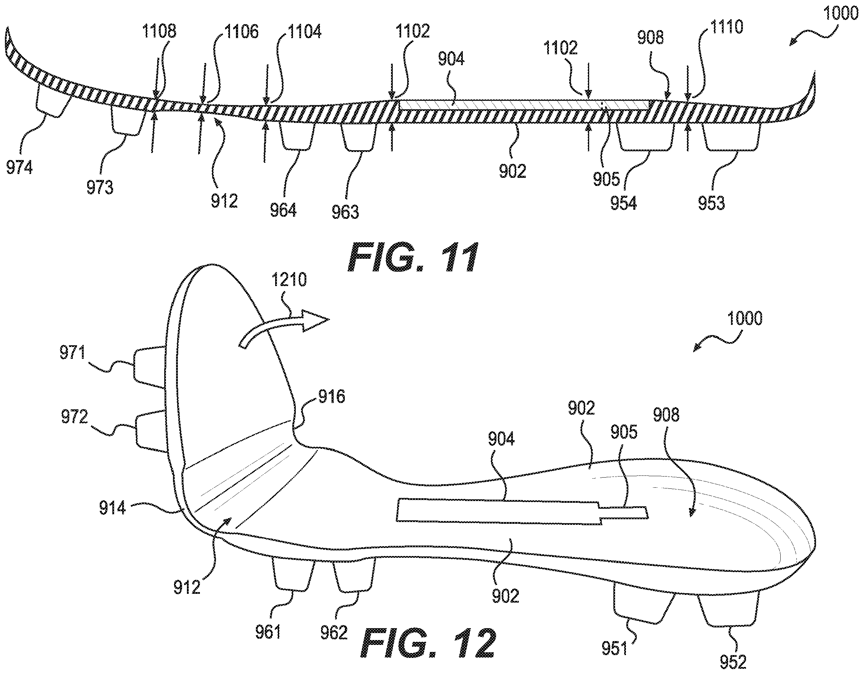

With a configuration of sole component 106 including at least one of these profile features or another flex structure or flex zone profile feature, it will be appreciated that flex structure or flex zone 212 may facilitate a desired localized bending or flex characteristic of outer sole component 106 and sole structure 103. For example, as shown in FIG. 2, in some embodiments flex structure or flex zone 212 may be located between at least one first traction element (e.g., traction element 122 generally located proximate toe region 116) and at least one second traction element (e.g., traction element 123 generally located in forefoot region 114 more proximate midfoot region 112) to provide desired localized bending or flex characteristics in outer sole component 106 and sole structure 103 at forefoot region 114. In some embodiments, flex structure or flex zone 212 may be located below metatarsals proximate the balls of the foot (see also FIG. 12, discussed below). Those skilled in the art will appreciate alternative and additional locations, width profiles, thickness profiles, and other features for flex structures or flex zones suitable for obtaining desired localized bending or flex characteristics of outer sole component 106 and sole structure 103.

### Flex Modifier Component Features

A construction and configuration of flex modifier component 208 may vary in different embodiments. Flex modifier component 208 generally may be an element formed of a fiber material configured to provide a desired rigidity characteristic to a selected portion of outer sole component 106 and sole structure 103. In some embodiments, flex modifier component 208 may be a shank.

A configuration of flex modifier component 208, including size, shape, and/or geometry, may vary in different embodiments. In some embodiments, flex modifier component 208 may be generally flat or planar. Flex modifier component 208 generally may be any geometric or non-geometric shape in plan view. In some embodiments, flex modifier component 208 generally may include a main body 220 and optionally may include one or more extended portions or projections. An extended portion or projection may have any geometric or non-geometric shape in plan view. For example, as shown in FIG. 2, in some embodiments flex modifier component 208 may include an elongated main body 220 and an extended portion or projection 222 that extends or projects from a rear portion of main body 220 in a direction of heel region 110. Those skilled in the art will be able to select a configuration of flex modifier component 208 suitable for providing a desired rigidity characteristic for outer sole component 106 and sole structure 103.

A location and orientation of flex modifier component 208 may vary in different embodiments. In some embodiments, flex modifier component 208 generally may extend in a longitudinal direction of outer sole component 106, i.e., in a direction generally from heel region 110 toward toe region 116. As shown in FIG. 2, in some embodiments flex modifier component 208 may extend through midfoot region 112 of outer sole component 106, generally from heel region 110 to forefoot region 114. For example, in some embodiments flex modifier component 208 may be located in an instep or arch portion of outer sole component 106, e.g., at midfoot region 112. In some embodiments, flex modifier component 208 may be oriented relative to a longitudinal or lateral direction of outer sole component 106, e.g., at an angle relative to a longitudinal or lateral direction of outer sole component 106. For example, as shown in FIG. 2, in some embodiments flex modifier component 208 may be generally aligned with a longitudinal direction of outer sole component 106. Those skilled in the art will be able to select a particular location and orientation of flex modifier component 208 suitable for desired rigidity or flex characteristics and performance characteristics in view of the present disclosure.

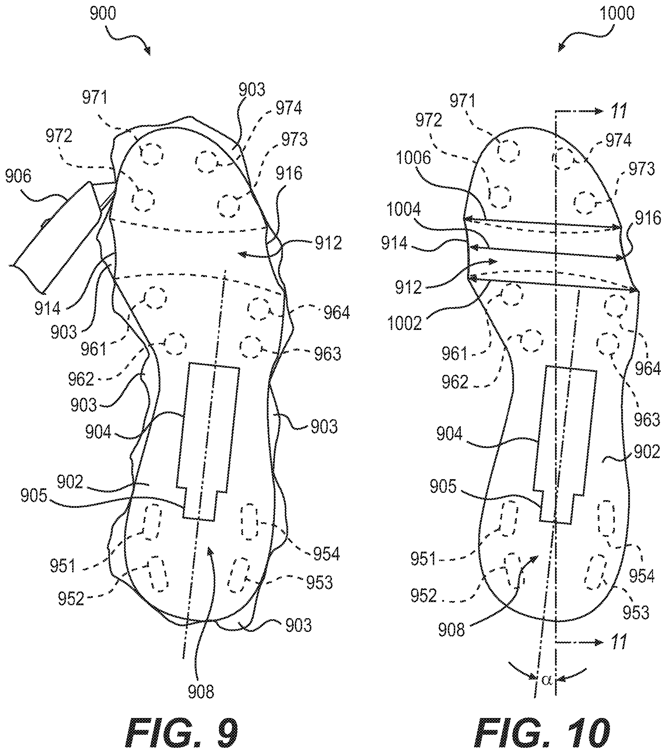

Portions of flex modifier component 208 variously may extend or project into selected locations, areas, or regions of outer sole component 106 in different embodiments. For example, as shown in FIG. 2, in some embodiments extended portion or projection 222 may extend or project into heel region 110. In some embodiments, at least a portion of a width of extended portion or projection 222 may be less than a width of main body 220, e.g., so that extended portion or projection 222 may extend into heel region 110 between two or more of a plurality of traction elements (e.g., cleats) arranged in a pattern in heel region 110 (see also discussion of FIGS. 9 to 12 below). With this configuration, extended portion or projection 222 may be provided at least substantially outside of an area in which individual traction elements of the plurality of traction elements are located in heel region 110. It will be appreciated that, in this manner, flex modifier component 208 may be selectively located so as to modify rigidity and/or flex characteristics of outer sole component 106 substantially only at selected locations of outer sole component 106, e.g., at a location(s) that is outside of the area that includes a plurality of traction elements. It further will be appreciated that, with this configuration, flex modifier component 208 may provide desired rigidity or flex characteristics to a selected portion of outer sole component 106 and article of footwear 100 while enabling different desired rigidity and/or flex characteristics and other performance characteristics at other portions of outer sole component 106 and sole structure 103 for article of footwear 100.

A construction of flex modifier component 208 may vary in different embodiments. Flex modifier component 208 generally may be formed of a fiber material and a mold material or binder material. In some embodiments, e.g., where outer sole component 106 is formed of a first mold material, flex modifier component 208 may include a second mold material that is the same as, or mold compatible with, the first mold material. It will be appreciated that, with this construction, in some embodiments flex modifier component 208 may be co-molded with outer sole component 106 by at least one of a chemical bond and a mechanical bond. In some embodiments, flex modifier component 208 may be co-molded with outer sole component 106 so that flex modifier component 208 generally may be located at an upper or interior surface of outer sole component 106. In accordance with the invention, flex modifier component 208 is co-molded with outer sole component 106 so that an upper surface of flex modifier component 208 is substantially continuous or flush with an upper surface of outer sole component 106. It will be appreciated that this configuration may facilitate efficient manufacturing using a co-molding process (see also discussion below). With this configuration, in some embodiments co-molded flex modifier component 208 may be substantially embedded or incorporated into an upper surface of a molded body of outer sole component 106.

Generally, flex modifier component 208 may include a fiber material, mold material, construction, and configuration that provide desired rigidity and/or flex characteristics to a selected portion of an outer sole component and sole structure for an article of footwear. In some embodiments, flex modifier component 208 may be made from a planar flex modifier material, such as a sheet of flex modifier material.

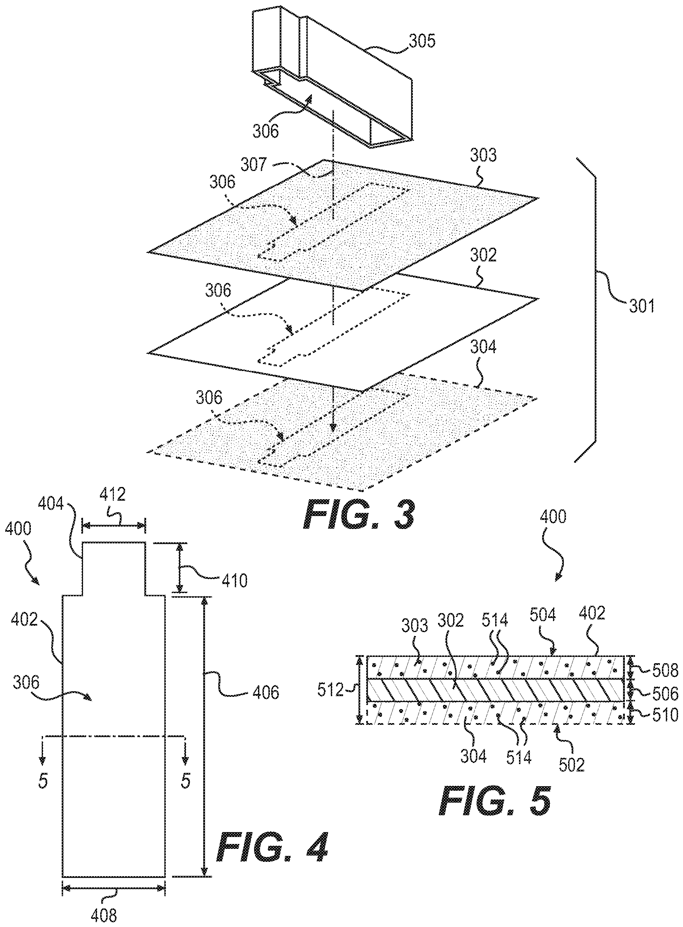

FIGS. 3 to 5 illustrate features of embodiments of a planar flex modifier material and methods for making a flex modifier component from the planar flex modifier material. FIG. 3 is an exploded perspective view of an embodiment of a multi-layer sheet of flex modifier material 301 and a removing device 305 for forming a flex modifier component having a desired configuration (including at least shape 306) from the sheet of flex modifier material 301. FIG. 4 is a plan view of an embodiment of a flex modifier component 400 formed from the flex modifier material of FIG. 3 in a removing process. And FIG. 5 is a cross-sectional view of flex modifier component 400 of FIG. 4 taken along lines 5-5 of FIG. 4.

A construction of flex modifier material 301 may vary in different embodiments. As shown in FIG. 3, in some embodiments flex modifier material 301 may have a multi-layer construction including at least one layer of fiber material. As used in this description and the claims, fiber material means a material made or formed of one or more fiber(s), where a fiber is an element having high aspect ratio or ratio of length to diameter (or thickness). For example, in some embodiments, short fibers, also known as discontinuous fibers, may have an aspect ratio or ratio of length to diameter in a range of 20 to 60. In some embodiments, long fibers, also known as a continuous fibers, may have an aspect ratio or ratio of length to diameter in the range of 200 to 500. A fiber material may be formed of one or more natural fiber(s), one or more man-made fiber(s), or a combination of one or more natural and/or man-made fibers. In some embodiments, a fiber material may be formed of cellulose fibers. In some embodiments, a fiber material may be formed of semi-synthetic fibers, such as rayon, which generally are naturally long-chain polymer structures. In some embodiments, a fiber material may be formed of synthetic fibers, such as polyamide (e.g., nylon) or polyester (e.g., Dacron), which generally are synthesized from low-molecular weight compounds by a polymerization reaction. In some embodiments, a fiber material may be a fiber fabric material. In some embodiments, a fiber material may be a non-woven fiber fabric material, such as a non-woven fiber mat. For example, in some embodiments a fiber material may be a fusion bonded non-woven fiber fabric material.

In some embodiments, flex modifier material 301 may include at least one layer of fiber material and at least one layer of binder or bonding material. In some embodiments, flex modifier material 301 may include a layer of binder or bonding material and a layer of fiber material. In some embodiments, flex modifier material 301 may include a layer of binder or bonding material sandwiched between two layers of fiber material. For example, as shown in FIG. 3, in some embodiments flex modifier material 301 may include a first layer 302, which may be disposed between a second layer 303 and a third layer 304. In some embodiments, first layer 302 may be a layer of binder or bonding material. In some embodiments, second layer 303 and third layer 304 each may be layers of fiber material. In some embodiments, first layer 302 may be an extruded hot melt film material sandwiched between second layer 303 and third layer 304, which both may be layers of fusion bonded non-woven fiber fabric material. In some embodiments, third layer 304 may be optional, as indicated by dashed perimeter lines in FIGS. 3 and 5. In some embodiments, third layer 304 may be made of another material, e.g., a non-fiber material.

In some embodiments, flex modifier material 301 may include a layer (e.g., first layer 302 of FIG. 3) formed of a plastic material that may mechanically and/or chemically bond with a mold material of an outer sole component (e.g., mold compatible with a rubber mold material of outer sole component 106 of FIG. 2). Examples of such plastic material may include, but are not limited to, Texon, Nylon 6, Nylon 12, and other polymers or polyamide (or "PA") materials that generally exhibit high mechanical strength, high rigidity, and good stability under heat. Those skilled in the art will be able to select a plastic material suitable for providing desired mechanical strength, rigidity, and stability characteristics under heat suitable for a desired flex modifier material.

A flex modifier component may be formed from a flex modifier material by various processes in different embodiments. In some embodiments, a flex modifier component may be removed from a flex modifier material, such as flex modifier material 301 in FIG. 3, by a removing process. In some embodiments, a removing process may include a cutting or stamping process. As shown in FIG. 3, in some embodiments a removing process may use a removing device 305. In some embodiments, removing device 305 may be a stamp, a punch, or a 'cookie cutter' device having a cutting element or blade configured with a hollow construction that defines a desired internal configuration 306. In some embodiments, a removing process may include pressing down removing device 305, e.g., in a direction of arrow 307, to stamp or punch through flex modifier material 301 to form a multi-layer flex modifier component 400, each layer of flex modifier component 400 having a configuration 306 corresponding to configuration 306 of hollow removing device 305, as shown by dashed lines 306 in each of first layer 302, second layer 303, and third layer 304 in FIG. 3. It will be appreciated that a configuration of removing device 305, including internal shape 306, may be selected to achieve a desired configuration of a resulting flex modifier component 400 (e.g., corresponding to flex modifier component 208 in FIG. 2) based on the present disclosure.

FIG. 4 is a plan view of an embodiment of a multi-layer flex modifier component 400. In some embodiments, flex modifier component 400 may correspond to flex modifier component 208 in FIG. 2. In some embodiments, flex modifier component 400 may have a multi-layer construction corresponding to multi-layer flex modifier material 301 and have a configuration (including at least shape 306), as shown in FIG. 3. In some embodiments, flex modifier component 400 may be made by a removing process (e.g., a stamping or punching process) as illustrated in FIG. 3 and may have a configuration (including at least shape 306) corresponding to an interior configuration 306 of removing device 305 of FIG. 3.

FIG. 5 is a cross-sectional view of an embodiment of flex modifier component 400 of FIG. 4, taken along section line 5-5 of FIG. 4. In some embodiments, first layer 302 may include a binder or bonding material. In some embodiments first layer 302 may be an extruded hot melt film layer, such as an extruded thermoplastic hot melt film.

A construction of second layer 303 and optional third layer 304 may vary in different embodiments. In some embodiments, second layer 303 and/or optional third layer 304 may be a fiber fabric material, such as a non-woven fiber mat or other non-woven fiber fabric material. As shown in FIG. 5, in some embodiments second layer 303 and/or third layer 304 may include a fusion bonded non-woven fiber mat or fiber fabric material. For example, as shown in FIG. 5, in some embodiments second layer 303 and/or third layer 304 may include a non-woven fiber fabric material that is infused or impregnated with mold material or other bonding material, illustrated in FIG. 5 as bold dots 514. In some embodiments, at least a portion of infused mold material or bonding material 514 may be the same as, or mold compatible or bond compatible with, a material of first layer 302. It will be appreciated that infusing second layer 303 and/or third layer 304 with a mold material or bonding material 514 that is mold compatible with a material of first layer 302 may strengthen flex modifier material 301 of flex modifier component 400. In some embodiments, at least a portion of infused mold material or bonding material 514 may be the same as, or mold compatible or bond compatible with, a material of outer sole component 106. It will be appreciated that infusing second layer 303 and/or third layer 304 with a mold material or bonding material 514 that is mold compatible or bond compatible with a mold material of outer sole component 106 may enable co-molding of flex modifier component 400 (e.g., flex modifier component 208) with an outer sole component (e.g., outer sole component 106 of FIG. 2) including at least one of a chemical bond and a physical or mechanical bond.

A configuration of flex modifier component 400, including at least shape, size, and thickness, may vary in different embodiments. Generally, flex modifier component 400 may have any configuration, including at least shape, size, and thickness, suitable for co-molding with an outer sole component at a location within a desired area of an outer sole component.

Flex modifier component 400 may have any regular or non-regular geometric shape suitable for providing desired rigidity or flex characteristics at a selected location of an outer sole component. For example, a shape of flex modifier component 400, or an element or portion of flex modifier component 400, may include rectangular, trapezoidal, triangular, circular, elliptical, parabolic, oblong, and other shapes. In some embodiments, flex modifier component 400 may have a shape that is elongated in a longitudinal direction. For example, as shown in FIG. 4, in accordance with the invention, flex modifier component 400 has a generally rectangular shaped body 402, e.g., having a length L_{B} 406 and a width W_{B} 408. In some embodiments, length L_{B} 406 may be greater than width W_{B} 408. In some embodiments, flex modifier component 400 may have a different regular or non-regular shape generally having length L_{B} and width W_{B}. In accordance with the invention, flex modifier component 400 has one or more extended portions. For example, as shown in FIG. 4, in some embodiments flex modifier component 400 may have a generally rectangular extended portion 404, e.g., having a length L_{XP} 410 and a width W_{XP} 412. In some embodiments, length L_{XP} 410 may be greater than width W_{XP} 412. In some embodiments, length L_{XP} 410 may be less than width W_{XP} 412. In some embodiments, extended portion 404 may have a different regular or non-regular geometric shape generally having a longitudinal length L_{XP} and a width W_{XP}.

A thickness of flexible modifier component 400 may vary in different embodiments. Flex modifier component 400 may have any thickness selected for providing desired rigidity or flex characteristics to outer sole component 106 and sole structure 103. As shown in FIG. 5, first layer 302 may have a thickness 506, second layer 303 may have a thickness 508, optional third layer 304 may have a thickness 510, and flex modifier component 400 may have a thickness 512, between a first surface (i.e., bottom surface) 502 and a second surface (i.e., top surface) 504, equal to a combined thickness of first layer 302, second layer 303, and optional fourth layer 304. A thickness of each of first layer 302, second layer 303, and optional third layer 304 may vary depending on a number of factors including, but not limited to, a material of each layer and desired rigidity or flex characteristics of flex modifier component 400, outer sole component 106, and sole structure 103. Those skilled in the art will be able to select a construction and configuration of flex modifier component 400, including at least materials, shape, size, and thickness, suitable for providing desired rigidity or flex characteristics and other performance characteristics of flex modifier component 400, outer sole component 106, and sole structure 103 of article of footwear 100, based on the present disclosure.

### Molding System Features

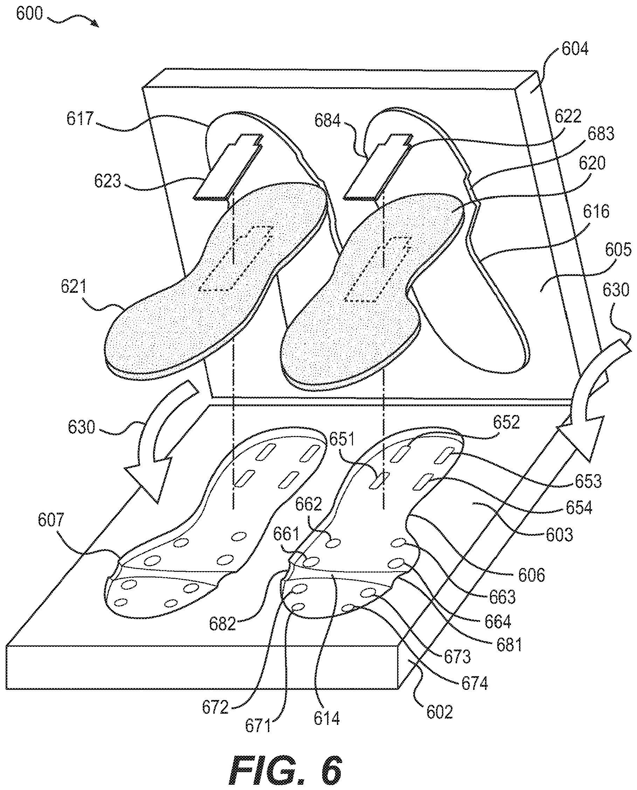

FIGS. 6 to 8 illustrate embodiments of a molding system for co-molding an outer sole component with a flex modifier component for a sole structure of an article of footwear.

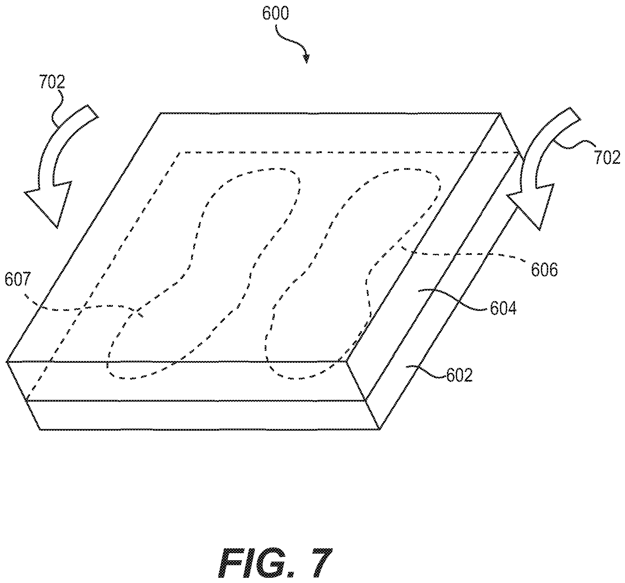

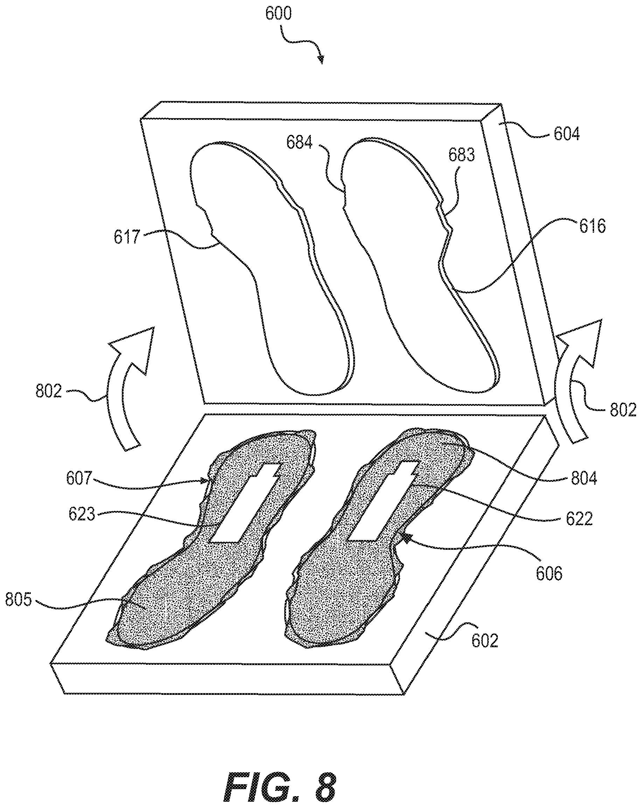

FIG. 6 is a perspective view of an embodiment of a molding system 600 for co-molding an outer sole component with a flex modifier component, with molding system 600 in an open, pre-molding state. FIG. 7 is a perspective view of molding system 600 of FIG. 6 in a closed, molding state. And FIG. 8 is a perspective view of molding system 600 of FIG. 6 in an open, post molding state.

A configuration of molding system 600 for co-molding an outer sole component with flex modifier component may vary in different embodiments. As shown in FIG. 6, in some embodiments molding system 600 generally may include a first or lower mold portion 602 having a lower mold surface 603 and a second or upper mold portion 604 having an upper mold surface 605.

A configuration of lower mold portion 602 may vary in different embodiments. As shown in FIG. 6, in some embodiments lower mold portion 602 may include at least one mold cavity formed in lower mold surface 603 for molding an outer sole component. For example, in some embodiments lower mold portion 602 may include a first mold cavity 606 and a second mold cavity 607 formed in lower mold surface 603. In some embodiments, a configuration of first mold cavity 606 and a configuration of second mold cavity 607 may be the same. In some embodiments, a configuration of first mold cavity 606 and a configuration of second mold cavity 607 may be different. For example, in some embodiments first mold cavity 606 and second mold cavity 607 may be configured for molding mirror image outer sole components for matching left and right articles of footwear, e.g., for a pair of same sized articles of footwear. Accordingly, for simplicity of description, features of first mold cavity 606 will be discussed in detail, and it will be appreciated that features of second mold cavity 607 may be the same or substantially similar.

A configuration of mold cavity 606 may vary in different embodiments. Mold cavity 606 generally may include one or more mold surface features for molding corresponding features of an outer sole component for an article of footwear. These molded features may include, but are not limited to, ground surface traction element features and flex structure or flex zone features located on an exposed lower surface or peripheral edge surface of an outer sole component for an article of footwear.

Mold cavity 606 may include at least one mold surface recess for forming a traction element on an exposed surface of an outer sole component. In some embodiments, mold cavity 606 may include a plurality of mold surface recesses for forming a plurality of traction elements. Configurations for each of a plurality of mold surface recesses for forming a plurality of traction elements may be the same or different, variously may be grouped together, and/or variously may be arranged or configured to form at least one pattern of traction elements on an exposed surface of an outer sole component. In some embodiments, mold cavity 606 may include a plurality of mold surface recesses that are configured for forming a corresponding first plurality of traction elements in a heel region of an outer sole component (e.g., in heel region 110 of outer sole component 106). For example, as shown in FIG. 6, in some embodiments mold cavity 606 may include a first plurality of mold surface recesses (e.g., including mold surface recess 651, mold surface recess 652, mold surface recess 653, and mold surface recess 654) configured for forming respective traction elements on an exposed surface of an outer sole component (e.g., for forming four generally straight or planar blade shaped cleats arranged in a generally rectangular pattern in heel region 110 of outer sole component 106). In some embodiments, mold cavity 606 may include a second plurality of mold surface recesses that are configured for forming a corresponding second plurality of traction elements in a midfoot region and/or forefoot region of an outer sole component (e.g., in midfoot region 112 and/or forefoot region 114 of outer sole component 106). For example, as shown in FIG. 6, in some embodiments mold cavity 606 may include a second plurality of mold surface recesses (e.g., including mold surface recess 661, mold surface recess 662, mold surface recess 663, and mold surface recess 664) configured for forming respective traction elements on an exposed surface of an outer sole component (e.g., for forming four conical-shaped cleats arranged in a generally rectangular or trapezoidal pattern in midfoot region 112 and/or forefoot region 114 of outer sole component 106). In some embodiments, mold cavity 606 may include a third plurality of mold surface recesses that are configured for forming a corresponding third plurality of traction elements in a forefoot region and/or toe region of an outer sole component (e.g., in forefoot region 114 and/or toe region 116 of outer sole component 106). For example, as shown in FIG. 6, in some embodiments mold cavity 606 may include a third plurality of mold surface recesses (e.g., including mold surface recess 671, mold surface recess 672, mold surface recess 673, and mold surface recess 674) configured for forming a respective third plurality of traction elements on an exposed surface of an outer sole component (e.g., for forming four conical-shaped cleats arranged in a generally rectangular or trapezoidal pattern in forefoot region 114 and/or toe region 116 of outer sole component 106). A number and pattern of mold surface recesses for forming traction elements or cleats may vary based on desired traction and performance characteristics of the outer sole component and article of footwear. Those skilled in the art will be able to select a desired number and/or pattern of mold surface recesses for forming traction elements or cleats suitable for desired traction and performance characteristics.

In some embodiments, mold cavity 606 may include a mold surface feature configured for forming a flex structure or flex zone of an outer sole component. For example, as shown in FIG. 6, in some embodiments mold cavity 606 may include a raised mold surface feature 614 located in forefoot region 114 of mold cavity 606, where raised mold surface feature 614 is configured to form a molded outer sole component having a reduced thickness profile for a flex structure or flex zone. In some embodiments, raised mold surface feature 614 may be configured to provide a molded outer sole component having a flex structure or flex zone with a continuous thickness profile, e.g., having a smooth tapered thickness profile. In some embodiments raised mold surface feature 614 may be configured to provide a molded outer sole component having a flex structure or flex zone with a discontinuous thickness profile, e.g., having a stepped thickness profile. In some embodiments, raised mold surface feature 614 may extend at least substantially across a medial-lateral width of mold cavity 606. In some embodiments, raised mold surface feature 614 may extend across only a portion of a medial-lateral width of mold cavity 606. In some embodiments, raised mold surface feature 614 may be located between adjacent pairs of the second plurality of mold surface recesses and the third plurality of mold surface recesses (i.e., between the pair of mold surface recess 661 and mold surface recess 664, and the pair of mold surface recess 672 and mold surface recess 673). In some embodiments, a location of raised mold surfaced feature 614 generally may correspond to a location of metatarsals adjacent the ball of the foot when disposed within an article of footwear.

In some embodiments, mold cavity 606 may include at least one mold surface feature located in forefoot region 114 of mold cavity 606, where the at least one mold surface feature is configured to form a molded outer sole component having a reduced width profile for a flex structure or flex zone. As shown in FIG. 6, in some embodiments, mold cavity 606 may include at least one of a notched mold surface portion 681 located at medial side 118 and a notched mold surface portion 682 located at lateral side 120 of mold cavity 606. In some embodiments, notched mold surface portion 681 and notched mold surface portion 682 may be located between adjacent pairs of the second plurality of mold surface recesses and the third plurality of mold surface recesses (i.e., between the pair of mold surface recess 661 and mold surface recess 664, and the pair of mold surface recess 672 and mold surface recess 673). In some embodiments, the locations of notched mold surface portion 681 and notched mold surface portion 682 generally may correspond to a location of metatarsals adjacent the ball of the foot when disposed within an article of footwear. In some embodiments, notched mold surface portion 681 and notched mold surface portion 682 may be located to correspond with raised mold surface feature 614.

A configuration of upper mold portion 604 may vary in different embodiments. Upper mold portion 604 generally may include mold features that complement mold features of lower mold portion 602 to form a molded outer sole component.

Upper mold portion 604 includes at least one mold surface portion for molding an outer sole component. For example, as shown in FIG. 6, in some embodiments upper mold portion 604 may include a first mold surface portion 616 that complements first mold cavity 606 of lower mold portion 602 and a second mold surface portion 617 that complements second mold cavity 607 of lower mold portion 602. In some embodiments, a configuration, including at least plan shape, of first mold surface portion 616 may be the same or substantially similar to a configuration of first mold cavity 606, and a configuration, including at least plan shape, of second mold surface portion 617 may be the same or substantially similar to a configuration of first mold cavity 607. In some embodiments, a configuration of first mold surface portion 616 and a configuration of second mold surface portion 617 may be the same. In some embodiments, a configuration of first mold surface portion 616 and a configuration of second mold surface portion 617 may be different. For example, in some embodiments first mold surface portion 616 and second mold surface portion 617 may be configured for molding mirror image outer sole components for matching left and right articles of footwear, e.g., a pair of same sized articles of footwear. Accordingly, for purposes of simplicity, features of first mold surface portion 616 will be discussed in detail, and it will be appreciated that features of second mold surface portion 617 may be the same or substantially similar.

Mold surface portion 616 may include one or more mold surface features for forming various features corresponding to features of mold cavity 606 for forming an outer sole component of an article of footwear. These molded features may include, but are not limited to, surface contour features of an upper surface of an outer sole component, e.g., to be located next to a foot disposed in an interior of the article of footwear, and flex structure or flex zone features located on an exposed peripheral edge surface of the outer sole component. For example, in some embodiments at least a portion of a perimeter edge of mold surface portion 616 may include a curved surface contour configured to form a lip, e.g., for following a lower perimeter portion of an upper (e.g., upper 102 of assembled article of footwear 100 in FIGS. 1 and 2). As shown in FIG. 6, in some embodiments mold surface portion 616 may include a notched mold surface portion 683 located at medial side 118 and a notched mold surface portion 684 (see also FIG. 8) located at lateral side 120 of mold surface portion 616. In some embodiments, a location of notched surface portion 683 and notched surface portion 684 of mold surface portion 616 may correspond with notched surface portion 681 and notched surface portion 682 of mold cavity 606.

FIGS. 6 to 8 illustrate exemplary processes for molding an outer sole component with a co-molded flex modifier component for a sole structure of an article of footwear using a molding system of FIG. 6. In some embodiments, these processes may be used for molding outer sole component 106 with co-molded flex modifier component 208 of FIG. 2.

As shown in FIGS. 6 to 8, processes for molding an outer sole component with co-molded flex modifier component may include disposing an outer sole component blank and a flex modifier component in a mold cavity of the molding system and closing the molding system under pressure and/or heat to co-mold the outer sole component blank and flex modifier component to form an outer sole component with a co-molded flex modifier component. For example, as shown in FIG. 6, in some embodiments a first outer sole component blank 620 and a second outer sole component blank 621 respectively may be disposed in first mold cavity 606 and second mold cavity 607 of lower mold portion 602, a first flex modifier component 622 and a second flex modifier component 623 respectively may be disposed at selected locations on upper surfaces of first outer sole component blank 620 and second outer sole component blank 621, and upper mold portion 604 may be closed, e.g., in a direction of arrows 630. In some embodiments, a configuration, including at least size and shape, of first outer sole component blank 620 and second outer sole component blank 621 may be selected to generally correspond to a configuration of respective mold cavity 606 and mold cavity 607 of lower mold portion 602 and corresponding mold surface portion 616 and mold surface portion 617 of upper mold portion 604. In some embodiments, a volume of mold material of each of outer sole component blank 620 and outer sole component blank 621 may be selected to generally correspond to a volume of respective mold cavity 606 and mold cavity 607 of lower mold portion 602 and corresponding mold surface portion 616 and mold surface portion 617 of upper mold portion 604. It will be appreciated that, in this manner, a process of molding an outer sole component with co-molded flex modifier component using molding system 600 may enable the mold material to flow and fully fill all mold features of mold cavity 606 and mold cavity 607 and minimize an amount of loss of mold material.

FIG. 7 illustrates molding system 600 in a closed, molding state. For example, as shown in FIG. 7, upper mold component 604 may be closed in a direction of arrows 702 to engage lower mold component 602 and close molding system 600. In some embodiments, at least one of heat and/or pressure (e.g., in a direction of closing the molding system) may be applied to at least one of lower mold portion 602 and/or upper mold portion 604, at a temperature and/or at a pressure and for a time sufficient to co-mold a mold material of outer sole component blank 620 and a mold material of flex modifier component 622. After co-molding outer sole component blank 620 and flex modifier component 622 in molding system 600 for a desired molding time, application of pressure may be released and/or application of heat may be removed.

FIG. 8 illustrates molding system 600 in an open, post molding state. As shown in FIG. 8, after a molding process using mold system 600 upper mold portion 604 may be removed from lower mold portion 602, e.g., by opening upper mold portion 602 in a direction of arrows 802. As shown in FIG. 8, in some embodiments a first unfinished molded outer sole component 804 and a second unfinished molded outer sole component 805 may have excess or residual mold material located at one or more perimeter portion(s) of mold cavity 606 and/or mold cavity 607 of lower mold portion 602. For simplicity of description, this disclosure will describe these features with respect to first unfinished molded outer sole component 804. For example, as shown in FIG. 8, in some embodiments excess or residual mold material may form one or more fin(s) of mold material between lower mold portion 602 and upper mold portion 604 at one or more peripheral portion(s) of mold cavity 606. In some embodiments, mold cavity 606 may be provided with a reserve mold material recess (not shown) that is in fluid communication with mold cavity 606, e.g., at a peripheral edge of a mold surface of mold cavity 606, into which excess or residual mold material in mold cavity 606 may flow during a molding process. In this case, in some embodiments a resulting unfinished molded outer sole component 804 may include a residual molded feature (such as a fin 903, shown in FIG. 9, described below) formed by excess or residual mold material on an exposed surface of molded outer sole component 804. Those skilled in the art will appreciate molding materials and molding processes suitable for controlling an amount of mold material used and resulting residual or excess mold material.

FIG. 9 illustrates in top plan view an embodiment of an unfinished molded outer sole component 900 including an outer sole component body 902 with a co-molded flex modifier component 904, removed from a mold system but prior to a finishing process. In some embodiments, unfinished molded outer sole component 900 may correspond to molded outer sole component 804 or molded sole component 805 of FIG. 8. As shown in FIG. 9, in some embodiments unfinished molded outer sole component 900 may include outer sole component body 902 having one or more fin(s) 903 of mold material extending from a peripheral edge, e.g., a medial and/or lateral side edge, of body 902. One or more fin(s) 903 or other molded feature of excess or residual mold material may be removed from body 902 in a removing process, such as a cutting process, using a removal device 906, such as a knife blade, a heat blade, a laser cutter, or another cutting device. Those skilled in the art will be able to select a finishing process suitable for providing desired finished appearance and performance characteristics based on the present disclosure.

FIGS. 10 to 12 illustrate embodiments of an outer sole component with a co-molded flex modifier component. FIG. 10 illustrates in top plan view embodiments of an outer sole component 1000. FIG. 11 is a cross-sectional view of outer sole component 1000 of FIG. 10, taken along section line 11-11 of FIG. 10. And FIG. 12 is a side perspective view of outer sole component 1000 of FIGS. 10 and 11 in a flexed configuration. In some embodiments, outer sole component 1000 may correspond to molded outer sole component 900 of FIG. 9 following a finishing process (i.e., post finishing process). Accordingly, for simplicity of description, elements of outer sole component 1000 may be indicated with corresponding reference numbers from unfinished molded outer sole component 900 of FIG. 9. In some embodiments, outer sole component 1000 may result directly from a molding process of molding system 600 of FIGS. 6 to 8, without requiring any finishing process. For example, in some embodiments a volume of mold material in a molding process of FIGS. 6 to 8 may be selected so that no excess or residual mold material results from the molding process. In some embodiments, outer sole component 1000 may correspond to outer sole component 106 of outer sole structure 103 of FIG. 2. Accordingly, elements of outer sole component 1000 may be indicated with corresponding reference numbers from outer sole component 106 of FIG. 2 to describe certain features of outer sole component 1000.

As shown in FIG. 10, in some embodiments body 902 of outer sole component 1000 may be co-molded with flex modifier component 904. In some embodiments, flex modifier component 904 may correspond to flex modifier component 208 of FIG. 2. In some embodiments, flex modifier component 904 may correspond to flex modifier component 400 of FIGS. 4 and 5. In some embodiments, flex modifier component 904 may correspond to flex modifier component 622 or flex modifier component 623 in a molding process of FIGS. 6 to 8.

A construction of body 902 may vary in different embodiments. Body 902 of outer sole component 1000 generally may be formed of any material suitable for contact with a ground surface. In some embodiments, outer sole component 1000 may be formed of an abrasion resistant material. In some embodiments, outer sole component 1000 may be formed of a mold material, such as a rubber mold material, by a molding process using a molding system and molding process of FIGS. 6 to 8.

Outer sole component 1000 may include at least one traction element on an exposed or bottom surface of outer sole component 1000. As shown in FIGS. 10 to 12, in some embodiments outer sole component 1000 may include one or more traction elements in one or more regions of outer sole component 1000, e.g., in one or more of heel region 110, midfoot region 112, forefoot region 114, and/or toe region 116 of outer sole component 1000. As shown in FIGS. 10 to 12, in some embodiments outer sole component 1000 may include a first plurality of traction elements in heel region 110. As shown in FIG. 10, in some embodiments outer sole component 1000 may include four traction elements (e.g. traction element 951, traction element 952, traction element 953, and traction element 954) arranged in a pattern around a central portion 908 of heel region 110. As shown in FIGS. 10 to 12, in some embodiments the first plurality of traction elements may be blade cleats arranged in a generally rectangular or trapezoidal pattern. In some embodiments, outer sole component 1000 may include a second plurality of traction elements, e.g., in midfoot region 112 and/or forefoot region 114. As shown in FIG. 10, in some embodiments outer sole component 1000 may include four traction elements (e.g., traction element 961, traction element 962, traction element 963, and traction element 964) arranged in a pattern in midfoot region 112 and/or forefoot region 114. As shown in FIGS. 10 to 12, in some embodiments the second plurality of traction elements may be conical-shaped cleats arranged in a generally rectangular or trapezoidal pattern. In some embodiments, outer sole component 1000 may include a third plurality of traction elements in forefoot region 114 and/or toe region 116. As shown in FIG. 10, in some embodiments outer sole component 1000 may include four traction elements (e.g., traction element 971, traction element 972, traction element 973, and traction element 974) arranged in a pattern in forefoot region 114 and/or toe region 116. As shown in FIGS. 10 to 12, in some embodiments the third plurality of traction elements may be conical-shaped cleats arranged in a generally rectangular or trapezoidal pattern. In some embodiments, one or more of these traction elements may be integrally molded as a single piece with outer sole component 1000, e.g., in a molding system and process of FIGS. 6 to 8. It will be appreciated that such molding system and process thus may provide significant advantages in cost and manufacturing. Those skilled in the art will appreciate alternative traction element structures, patterns, and methods of manufacture suitable for a desired article of footwear and desired performance characteristics.

A thickness profile of outer sole component 1000 may vary in different embodiments. Outer sole component 1000 may include a thickness profile that provides desired rigidity characteristics and/or facilitates bending or flex characteristics of outer sole component 1000. As shown in FIG. 11, in some embodiments outer sole component 1000 generally may have a thickness profile including a thickness 1102 at flex modifier component 904 and portions of outer sole component 1000 located proximate to flex modifier component 904, a thickness 1104 in forefoot region 114, a thickness 1106 in a flex structure or flex zone 912, a thickness 1108 in toe region 116, and a thickness 1110 in heel region 110. As discussed below, controlling a thickness profile of outer sole component 1000 may facilitate controlling rigidity, bending, flex, and other performance characteristics of outer sole component 1000.

A thickness profile of outer sole component 1000 in midfoot region 112 may vary in different embodiments. Outer sole component 1000 may have a thickness profile including a thickness 1102 in midfoot region 112 sufficiently thick to enable flex modifier component 904 to be substantially embedded in, and co-molded with, outer sole component body 902. For example, in some embodiments thickness 1102 may be approximately 2 to 3 mm greater than a thickness of adjacent portions of outer sole component 1000, e.g., thickness 1104 at forefoot region 114 and/or thickness 1110 at heel portion 110. It will be appreciated that this configuration may enable outer sole component 1000 and flex modifier component 904 to be at least substantially embedded in body 902 of outer sole component 1000 and/or co-molded with body 902 of outer sole component 1000 including at least one of a chemical bond and a mechanical bond.

In some embodiments, outer sole component 1000 may have a thickness profile including a reduced thickness on medial side 118 and/or lateral side 120 at midfoot region 112 of outer sole component 904. In some embodiments, outer sole component 1000 may have a thickness profile that tapers in a medial and/or lateral direction from flex modifier component 904. It will be appreciated that such a tapered configuration may provide or facilitate a desired torsional rigidity characteristic of outer sole component 1000 at midfoot region 112. It also will be appreciated that controlling a configuration (including at least thickness, width, and shape) of flex modifier component 904 may facilitate controlling a torsional rigidity characteristic of outer sole component 1000 about midfoot region 112. It further will be appreciated that controlling a thickness profile of midfoot region 112, including thickness 1102 and a thickness of portions of body 902 medial and lateral of flex modifier component 904, may enable or facilitate providing desired rigidity, flex, and performance characteristics of outer sole component 1000 at midfoot region 112.

A thickness profile of outer sole component 1000 may cooperate with a configuration, location, and orientation of co-molded flex modifier component 904 to provide desired flex modification characteristics of outer sole component 1000. In some embodiments, a configuration (including at least size and shape), location, and/or orientation of flex modifier component 904 may be selected to cooperate with other features of outer sole component 1000 to provide desired rigidity, flex, and/or other performance characteristics. For example, as shown in FIGS. 10 to 12, in some embodiments a configuration, location, and orientation of flex modifier component 904 may cooperate with a location of at least the third plurality of traction elements located in heel region 110. In some embodiments, flex modifier component 904 may have an elongated body 904 and an extended portion 905 that have a configuration, location, and orientation that cooperate with a configuration (including at least number and/or pattern) of the third plurality of traction elements in heel region 110. In some embodiments, a location and orientation of flex modifier component 904 may be selected relative to other features of outer sole component 1000 to facilitate a desired relative location and/or orientation of flex modifier component 904. As shown in FIG. 10, in some embodiments flex modifier component 904 may have a generally rectangular body 904 with a generally rectangular extended portion 905, where body 904 generally is located in midfoot region 112 and oriented at an angle relative to a longitudinal or lateral direction of outer sole component 1000 (e.g., in some embodiments flex modifier component 904 may be oriented at an angle α relative to generally longitudinal section line 11-11). In this configuration, extended portion 905 may extend into central region 908 of heel region 110 between the third plurality of traction elements (e.g., between traction element 951, traction element 952, traction element 953, and traction element 954). It will be appreciated that this configuration, location, and orientation of flex modifier component 904 may provide a desired first rigidity or flex characteristic and first torsional rigidity characteristic in midfoot region 112, a desired second rigidity or flex characteristic in at least a portion of central region 908 of heel region 110, and a desired third rigidity or flex characteristic in an area of heel region 110 including the third plurality of traction elements but excluding at least a portion of central region 908 that includes extended portion 905 of flex modifier component 904. Those skilled in the art will be able to select a desired configuration, location, and/or orientation of flex modifier component 904, including any extended portion (e.g., extended portion 905), and a desired configuration of traction elements or other features of outer sole component 1000, suitable for achieving desired rigidity, flex, and other performance characteristics of outer sole component 1000 and a sole structure and article of footwear incorporating outer sole component 1000.

A thickness profile of outer sole component 1000 in heel region 110 may vary in different embodiments. In some embodiments, outer sole component 1000 may have a thickness profile including a reduced thickness profile in heel region 110, e.g., where a thickness 1110 is less than a thickness 1102. In some embodiments, outer sole component 1000 may include a tapered thickness profile in at least a portion of a direction from midfoot region 112 to heel region 110. In some embodiments, as shown in FIGS. 11 and 12, outer sole component 1000 may include a thickness profile that forms a cupped configuration in heel region 110 that is configured to receive and securely support a heel of a foot with comfort. It will be appreciated that such a configuration, including a reduced thickness or tapered thickness profile, also may provide desired rigidity, flex, and/or performance characteristics in heel region 110.

A thickness profile of outer sole component 1000 in forefoot region 114 and toe region 116 may vary in different embodiments. In some embodiments outer sole component 1000 may include a thickness profile that forms a flex structure or flex zone that facilitates localized bending and flexing of outer sole component 1000 in forefoot region 114 and/or toe region 116. For example, as shown in FIGS. 10 to 12, in some embodiments outer sole component 1000 may include a flex structure or flex zone 912 in forefoot region 114. In some embodiments, flex structure or flex zone 912 may be located in forefoot region 114 between the second plurality of traction elements generally located in midfoot region 112 and/or forefoot region 114 and the third plurality of traction elements located in forefoot region 114 and/or toe region 116. In some embodiments, flex structure or flex zone 912 may be located below metatarsals proximate the ball of the foot, where a foot is located in an article footwear including outer sole component 1000. In some embodiments, outer sole component 1000 may include a thickness profile that facilitates bending or flexing characteristics at flex structure or flex zone 912 of outer sole component 1000. For example, as shown in FIGS. 10 to 12, in some embodiments outer sole component 1000 may include a thickness profile that tapers down from thickness 1104 in forefoot region 114 to thickness 1106 at flex structure or flex zone 912 and tapers back up to thickness 1108 at toe region 116. That is, in some embodiments thickness 1106 may be less than at least one of thickness 1104 and thickness 1108. In some embodiments, thickness 1104 may be greater than thickness 1108. And in some embodiments, outer sole component 1000 generally may taper in a direction from flex modifier component 904 to toe region 116. Those skilled in the art will be able to select a thickness profile suitable for providing a desired flexing and/or bending characteristic in forefoot region 114 (and toe region 116), including at flex structure or flex zone 912.

A width profile of outer sole component 1000 at flex structure or flex zone 912 may vary in different embodiments. In some embodiments, outer sole component 1000 may include a notched or cut-out portion located on a medial side and/or a lateral side in forefoot region 114 that facilitates localized bending or flexing of outer sole component 1000, e.g., at flex structure or flex zone 912 in forefoot region 114. For example, as shown in FIG. 10, in some embodiments a first notched or cut-out portion 914 and/or a second notched or cut-out portion 916 may be provided on opposing medial side 118 and lateral side 120 of outer sole component 1000. In some embodiments, notched or cut-out portion 914 and/or notched or cut-out portion 916 may form flex structure or flex zone 912 of outer sole component 1000. In some embodiments, notched or cut-out portion 914 and/or notched or cut-out portion 916 may correspond and cooperate with a tapered thickness profile of flex structure or flex zone 912. In some embodiments, outer sole component 1000 may include a width profile that tapers down from a width 1002 at forefoot region 114 to a width 1004 in flex structure or flex zone 912 back up to a width 1006 adjacent toe region 116. It will be appreciated that such a tapered width configuration may facilitate localized bending and flexing at flex structure or flex zone 912 of outer sole component 1000. Those skilled in the art will appreciate alternative notched or cut-out configurations suitable for providing desired flexing, bending, or other performance characteristics of outer sole component 1000.

It will be appreciated that each of the above embodiments, including a thickness profile and/or width profile at flex structure or flex zone 912, may provide desired rigidity and flex characteristics at flex structure or flex zone 912. It further will be appreciated that each of these embodiments may facilitate a smooth response characteristic (e.g., bending without buckling of the sole structure) and other desired performance characteristics for a sole structure and article of footwear, e.g., when outer sole component 1000 of the sole structure and article of footwear is bent or flexed at flex structure or flex zone 912 in a direction of arrow 1210 of FIG. 12.

### Manufacturing Process Features

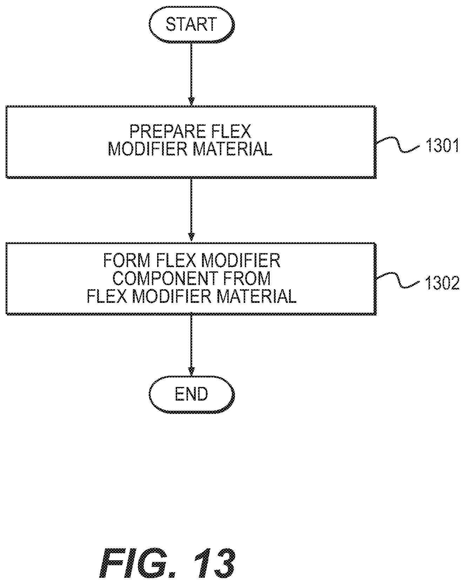

FIG. 13 is a flow diagram illustrating processes for making a flex modifier component. As shown in FIG. 13, in some embodiments a method for making a flex modifier component generally may include processes of preparing a flex modifier material 1301 and forming a flex modifier component from the flex modifier material 1302.

Process 1301 may vary in different embodiments. In some embodiments, process 1301 may include preparing a sheet of flex modifier material. For example, in some embodiments process 1301 may include preparing a multi-layer sheet of flex modifier material, as illustrated in FIG. 3. In some embodiments, process 1301 may include preparing a multi-layer sheet of flex modifier material including at least one fiber material layer and at least one binder or bonding material layer. In some embodiments, process 1301 may include preparing a multi-layer sheet of flex modifier material, e.g., having an extruded hot melt film sandwiched between fiber fabric material layers, as illustrated in FIGS. 3 to 5.

Process 1302 may vary in different embodiments. In some embodiments, process 1302 may include removing a flex modifier component from a sheet of flex modifier material. In some embodiments, process 1302 may include removing a flex modifier component from a sheet of flex modifier material using a removing device, such as a cutting device, a stamp device, or a cookie cutter device, as illustrated in FIG. 3.

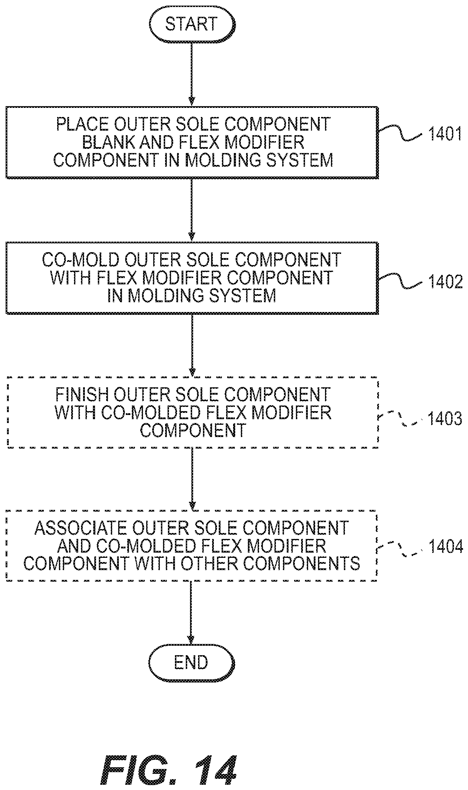

FIG. 14 is a flow diagram illustrating processes for making a sole structure for an article of footwear including an outer sole component with a co-molded flex modifier component. As shown in FIG. 14, in some embodiments a method for making a sole structure for an article of footwear may include placing an outer sole component blank and a flex modifier component in a molding system (process 1401), and co-molding the outer sole component blank and the flex modifier component to form an outer sole component with a co-molded flex modifier component in the molding system (process 1402). In some embodiments, a method for making a sole structure for an article of footwear optionally may include finishing a molded outer sole component with a co-molded flex modifier component (process 1403), and/or associating one or more other components with the molded outer sole component with a co-molded flex modifier component (process 1404). Optional processes 1403 and 1404 are illustrated in FIG. 14 using dashed lines.

Process 1401 may vary in different embodiments. In some embodiments, process 1401 may include disposing an outer sole component blank in a first (e.g., lower) mold portion of a molding system that is configured to mold an outer sole component having a desired configuration, including at least size and shape, disposing a flex modifier component at a desired location (at least longitudinal and/or lateral location and orientation) on an exposed top or upper surface of the outer sole component blank, closing a second (e.g., upper) mold portion of the molding system with the first mold portion of the molding system, and co-molding the outer sole component blank with the flex modifier component in the molding system, e.g., using a hot press molding process. In some embodiments, disposing a flex modifier component on an exposed upper surface of an outer sole component blank may include locating the flex modifier component, or a portion of the flex modifier component (e.g., an extended portion of the flex modifier component), relative to one or more mold features of a mold cavity of the molding system. For example, in some embodiments disposing a flex modifier component on an exposed upper surface of the outer sole component blank may include locating an extended portion of the flex modifier relative to one or more recess features of the mold cavity that correspond to one or more traction element(s) of a molded outer sole component formed by the molding system. In some embodiments, disposing the flex modifier component on an exposed upper surface of the outer sole component blank may include orienting the flex modifier component relative to the outer sole component blank or mold cavity of the molding system. For example, in some embodiments disposing the flex modifier component on the exposed upper surface of the outer sole component blank may include disposing the flex modifier component at a desired angle α relative to a longitudinal and/or lateral direction of a molded outer sole component formed by the molding system.

In some embodiments, process 1402 may include co-molding a mold material of the flex modifier component with a mold material of the outer sole component blank. For example, in some embodiments an outer sole component blank may include a first mold material and a flex modifier component may include a fiber material that is infused or impregnated with a second mold material that is the same as, or mold compatible with, the first mold material, and process 1402 may include co-molding the outer sole component blank and the flex modifier component using a hot press molding process that naturally fuses or blends the mold material of the flex modifier component with the mold material of the outer sole component so that the flex modifier component is at least one of chemically and mechanically bonded with the molded outer sole component formed by the molding system. In some embodiments, a hot press molding process may be controlled to co-mold a plastic mold material of a flex modifier component with a rubber mold material of an outer sole component at a temperature and pressure and for a time sufficient to co-mold the mold materials but not overcook the rubber mold material so as to make the molded rubber material brittle. It will be appreciated that such hot press molding process may improve a durability of the molded rubber outer sole component, and may reduce or eliminate any need for applying any final coating to the molded rubber or for performing any other finishing process of the molded outer sole component.

In some embodiments, optional process 1403 may include finishing a peripheral edge of the outer sole component. In some embodiments, finishing a peripheral edge may include removing a fin or web of mold material from the molded outer sole component, e.g., by a cutting or trimming process using a removing device, such as a knife blade, a hot melt blade, a laser cutter, or another cutting device.

In some embodiments, optional process 1404 may include associating one or more additional components with an outer sole component and co-molded flex modifier component. For example, in some embodiments an outer sole component with a co-molded flex modifier component may be associated with an optional midsole component to form a multi-layer sole structure for an article of footwear. In some embodiments, an outer sole component with a co-molded flex modifier component may be associated with one or more removable traction elements. In some embodiments, an outer sole component with a co-molded flex modifier component may be directly or indirectly (e.g., via an optional midsole) associated with an upper to form an article of footwear.

Benefits explained herein with respect to different elements of, or processes for making, outer sole component 106, sole structure 103, outer sole component 900, and outer sole component 1000 may be provided by the elements or processes individually, and further may be increased by combining certain of the elements or processes together.

While various embodiments have been described, the description is intended to be exemplary, rather than limiting, and it will be apparent to those of ordinary skill in the art that many more embodiments and implementations are possible. Accordingly, the embodiments are not to be limited except within the scope of the attached claims. Also, various modifications and changes may be made within the scope of the attached claims.

## Claims

1. A sole structure (103) for an article of footwear (100), comprising:
an outer sole component (106) formed of a first mold material, the outer sole component having an exposed surface configured to engage a ground surface and an interior surface opposite the exposed surface; and
a flex modifier component (208) having a generally rectangular shaped body (220) having a first width (408) and an extended portion (222) having a second width (412), wherein the second width is less than the first width, the flex modifier component being formed of a fiber material and a second mold material, the flex modifier component being co-molded with the outer sole component so that an upper surface of the flex modifier component is substantially continuous or flush with the interior surface of the outer sole component.

2. The sole structure according to claim 1, wherein the flex modifier component has a multi-layer construction that includes at least a first layer (303, 304) of fiber material.

3. The sole structure according to claim 2, wherein:
(1) the at least first layer of fiber material includes a non-woven fiber fabric material; or
(2) the at least first layer of fiber material includes a fusion bonded non-woven fiber fabric material.

4. The sole structure according to claim 2, wherein the at least first layer of fiber material is impregnated with a polymer material.

5. The sole structure according to claim 4, wherein:
(1) the polymer material is mold compatible with the first mold material of the outer sole component; or
(2) the polymer material is a styrene-coated polymer material.

6. The sole structure according to claim 2, wherein:
(1) the multi-layer construction includes an extruded hot melt film;
(2) the multi-layer construction includes an extruded hot melt film (302) sandwiched between fiber material layers; or
(3) the multi-layer construction includes an extruded thermoplastic hot melt film sandwiched between fusion bonded non-woven fiber fabric material layers impregnated with styrene-coated polymer.

7. The sole structure according to claim 1, wherein the flex modifier component is co-molded with the outer sole component such that the second mold material of the flex modifier component fuses or blends with the first mold material of the outer sole component to create a chemical and mechanical bond.

8. The sole structure according to claim 1, wherein the outer sole component has a first configuration, the flex modifier component has a second configuration, and the flex modifier component is disposed at a location of the outer sole component selected so that the second configuration of the flex modifier component cooperates with the first configuration of the outer sole component to modify a flex characteristic of the outer sole component substantially only at the selected location of the outer sole component.

9. The sole structure according to claim 8, wherein the second configuration of the flex modifier component includes an elongated shank that extends through a midfoot region (112) of the sole structure generally from a heel region (110) to a forefoot region (114) of the sole structure.

10. The sole structure according to claim 9, wherein the first configuration of the outer sole component includes a plurality of traction elements arranged in a pattern, and the elongated shank has at least one extended portion that extends within a region located between the plurality of traction elements of the first configuration of the outer sole component.

11. The sole structure according to claim 1, wherein the outer sole component has a first configuration including a plurality of traction elements arranged in a forefoot region and a heel region of the outer sole component, the flex modifier component has a second configuration including an elongated shank that extends through a midfoot region of the outer sole component generally from the heel region to the forefoot region of the outer sole component, and the flex modifier component is disposed at a location of the outer sole component selected so that the second configuration of the flex modifier component cooperates with the first configuration of the outer sole component to modify a flex characteristic of the outer sole component substantially only at the selected location of the outer sole component outside of an area that includes the plurality of traction elements.

12. An article of footwear (100), comprising:
an upper (102); and
a sole structure (103) associated with the upper, the sole structure including:
an outer sole component (106) formed of a first mold material, the outer sole component having an exposed surface configured to engage a ground surface and an interior surface opposite the exposed surface; and
a flex modifier component (208) having a generally rectangular shaped body (220) having a first width (408) and an extended portion (222) having a second width (412), wherein the second width is less than the first width, the flex modifier component being formed of a fiber material and a second mold material, the flex modifier component being co-molded with the outer sole component so that an upper surface of the flex modifier component is substantially continuous or flush with the interior surface of the outer sole component.

13. The article of footwear according to claim 12, wherein the sole structure further includes a midsole component (104) disposed between the upper and the outer sole component with the co-molded flex modifier component.

14. A method of making a sole structure (103) for an article of footwear (100), comprising:
disposing an outer sole component blank (620) of a first mold material in a mold cavity (606) of a molding system that is configured to correspond with an outer sole component of the sole structure (103);
disposing a flex modifier component (622) having a generally rectangular shaped body
having a first width and an extended portion having a second width, wherein the second width is less than the first width, the flex modifier component including a fiber material and a second mold material on an exposed upper surface of the outer sole component blank; and
co-molding the outer sole component blank and the flex modifier component in the molding system to form the outer sole component, with an upper surface of the co-molded flex modifier component substantially continuous or flush with an interior surface of the outer sole component.

15. The method according to claim 14, further comprising;
preparing a multi-layer flex modifier material including an extruded thermoplastic hot melt film sandwiched between fusion bonded non-woven fiber fabric material impregnated with a styrene-coated polymer; and
forming the flex modifier component from the multi-layer flex modifier material.

## Patentansprüche

1. Sohlenstruktur (103) für einen Schuhartikel (100), umfassend:
eine äußere Sohlenkomponente (106), die aus einem ersten Formmaterial gebildet ist, wobei die äußere Sohlenkomponente eine freiliegende Oberfläche, die so ausgestaltet ist, dass sie in eine Bodenoberfläche eingreift, und eine innere Oberfläche aufweist, die der freiliegenden Oberfläche entgegengesetzt ist; und
eine flexible Modifikatorkomponente (208), die einen Körper (220) mit allgemein rechtwinkliger Form, der eine erste Breite (408) aufweist, und einen erweiterten Abschnitt (222) aufweist, der eine zweite Breite (412) aufweist, wobei die zweite Breite kleiner als die erste Breite ist, wobei die flexible Modifikatorkomponente aus einem Fasermaterial und einem zweiten Formmaterial gebildet ist, wobei die flexible Modifikatorkomponente mit der äußeren Sohlenkomponente mitgeformt ist, sodass eine obere Oberfläche der flexiblen Modifikatorkomponente im Wesentlichen mit der inneren Oberfläche der äußeren Sohlenkomponente zusammenhängend oder bündig ist.

2. Sohlenstruktur nach Anspruch 1, wobei die flexible Modifikatorkomponente eine mehrschichtige Konstruktion aufweist, die mindestens eine erste Schicht (303, 304) aus Fasermaterial umfasst.

3. Sohlenstruktur nach Anspruch 2, wobei:
(1) die mindestens erste Schicht aus Fasermaterial ein Vliesfasergewebematerial umfasst; oder
(2) die mindestens erste Schicht aus Fasermaterial ein schmelzgebundenes Vliesfasergewebematerial umfasst.

4. Sohlenstruktur nach Anspruch 2, wobei die mindestens erste Schicht aus Fasermaterial mit einem Polymermaterial imprägniert ist.

5. Sohlenstruktur nach Anspruch 4, wobei:
(1) das Polymermaterial formkompatibel mit dem ersten Formmaterial der äußeren Sohlenkomponente ist; oder
(2) das Polymermaterial ein styrolbeschichtetes Polymermaterial ist.

6. Sohlenstruktur nach Anspruch 2, wobei:
(1) die mehrschichtige Konstruktion einen extrudierten Heißschmelzfilm umfasst;
(2) die mehrschichtige Konstruktion einen extrudierten Heißschmelzfilm (302) umfasst, der zwischen Fasermaterialschichten eingeschichtet ist; oder
(3) die mehrschichtige Konstruktion einen extrudierten thermoplastischen Heißschmelzfilm umfasst, der zwischen mit styrolbeschichtetem Polymer imprägnierten schmelzgebundenen Vliesfasergewebematerialschichten eingeschichtet ist.

7. Sohlenstruktur nach Anspruch 1, wobei die flexible Modifikatorkomponente mit der äußeren Sohlenkomponente mitgeformt ist, sodass das zweite Formmaterial der flexiblen Modifikatorkomponente mit dem ersten Formmaterial der äußeren Sohlenkomponente so verschmilzt oder sich damit mischt, dass eine chemische und mechanische Bindung erzeugt werden.

8. Sohlenstruktur nach Anspruch 1, wobei die äußere Sohlenkomponente eine erste Ausgestaltung aufweist, die flexible Modifikatorkomponente eine zweite Ausgestaltung aufweist und die flexible Modifikatorkomponente an einer Stelle der äußeren Sohlenkomponente angeordnet ist, die derart ausgewählt ist, dass die zweite Ausgestaltung der flexiblen Modifikatorkomponente so mit der ersten Ausgestaltung der äußeren Sohlenkomponente zusammenwirkt, dass eine Biegungseigenschaft der äußeren Sohlenkomponente im Wesentlichen nur an der ausgewählten Stelle der äußeren Sohlenkomponente geändert wird.

9. Sohlenstruktur nach Anspruch 8, wobei die zweite Ausgestaltung der flexiblen Modifikatorkomponente einen länglichen Schaft umfasst, der sich durch eine Mittelfußregion (112) der Sohlenstruktur allgemein von einer Fersenregion (110) zu einer Vorfußregion (114) der Sohlenstruktur erstreckt.

10. Sohlenstruktur nach Anspruch 9, wobei
die erste Ausgestaltung der äußeren Sohlenkomponente eine Vielzahl von Zugelementen umfasst, die in einem Muster angeordnet sind, und der längliche Schaft mindestens einen erweiterten Abschnitt aufweist, der sich innerhalb einer Region erstreckt, die sich zwischen der Vielzahl von Zugelementen der ersten Ausgestaltung der äußeren Sohlenkomponente befindet.

11. Sohlenstruktur nach Anspruch 1, wobei die äußere Sohlenkomponente eine erste Ausgestaltung aufweist, die eine Vielzahl von Zugelementen umfasst, die in einer Vorfußregion und einer Fersenregion der äußeren Sohlenkomponente angebracht sind, wobei die flexible Modifikatorkomponente eine zweite Ausgestaltung aufweist, die einen länglichen Schaft umfasst, der sich durch eine Mittelfußregion der äußeren Sohlenkomponente allgemein von der Fersenregion der Vorfußregion der äußeren Sohlenkomponente erstreckt, und die flexible Modifikatorkomponente an einer Stelle der äußeren Sohlenkomponente angeordnet ist, die derart ausgewählt ist, dass die zweite Ausgestaltung der flexiblen Modifikatorkomponente so mit der ersten Ausgestaltung der äußeren Sohlenkomponente zusammenwirkt, dass eine Biegungseigenschaft der äußeren Sohlenkomponente im Wesentlichen nur an der ausgewählten Stelle der äußeren Sohlenkomponente außerhalb eines Bereichs verändert wird, der die Vielzahl von Zugelementen umfasst.

12. Schuhartikel (100), umfassend:
einen Oberteil (102); und
eine Sohlenstruktur (103), die mit dem Oberteil verbunden ist, wobei die Sohlenstruktur umfasst:
eine äußere Sohlenkomponente (106), die aus einem ersten Formmaterial gebildet ist, wobei die äußere Sohlenkomponente eine freiliegende Oberfläche, die so ausgestaltet ist, dass sie in eine Bodenoberfläche eingreift, und eine innere Oberfläche aufweist, die der freiliegenden Oberfläche entgegengesetzt ist; und
eine flexible Modifikatorkomponente (208), die einen Körper (220) mit allgemein rechtwinkliger Form, der eine erste Breite (408) aufweist, und einen erweiterten Abschnitt (222) aufweist, der eine zweite Breite (412) aufweist, wobei die zweite Breite kleiner als die erste Breite ist, wobei die flexible Modifikatorkomponente aus einem Fasermaterial und einem zweiten Formmaterial gebildet ist, wobei die flexible Modifikatorkomponente mit der äußeren Sohlenkomponente mitgeformt ist, sodass eine obere Oberfläche der flexiblen Modifikatorkomponente im Wesentlichen mit der inneren Oberfläche der äußeren Sohlenkomponente zusammenhängend oder bündig ist.

13. Schuhartikel nach Anspruch 12, wobei die Sohlenstruktur ferner eine Mittelsohlenkomponente (104) umfasst, die zwischen dem Oberteil und der äußeren Sohlenkomponente mit der mitgeformten flexiblen Modifikatorkomponente angeordnet ist.

14. Verfahren zum Herstellen einer Sohlenstruktur (103) für einen Schuhartikel (100), umfassend:
Anordnen eines Rohteils (620) einer äußeren Sohlenkomponente aus einem ersten Formmaterial in einer Formhöhlung (606) eines Formsystems, das so ausgestaltet ist, dass es einer äußeren Sohlenkomponente der Sohlenstruktur (103) entspricht;
Anordnen einer flexiblen Modifikatorkomponente (622), die einen Körper mit allgemein rechtwinkliger Form, der eine erste Breite aufweist, und einen erweiterten Abschnitt aufweist, der eine zweite Breite aufweist, wobei die zweite Breite kleiner als die erste Breite ist, wobei die flexible Modifikatorkomponente ein Fasermaterial und ein zweites Formmaterial auf einer freiliegenden oberen Oberfläche des Rohteils der äußeren Sohlenkomponente umfasst; und
Mitformen des Rohteils der äußeren Sohlenkomponente und der flexiblen Modifikatorkomponente in dem Formsystem, sodass eine äußere Sohlenkomponente gebildet wird, wobei eine obere Oberfläche der mitgeformten flexiblen Modifikatorkomponente im Wesentlichen mit einer inneren Oberfläche der äußeren Sohlenkomponente zusammenhängend oder bündig ist.

15. Verfahren nach Anspruch 14, ferner umfassend:
Vorbereiten eines mehrschichtigen flexiblen Modifikatormaterials, das einen extrudierten thermoplastischen Heißschmelzfilm umfasst, der zwischen mit einem styrolbeschichteten Polymer imprägniertem schmelzgebundenem Vliesfasergewebematerial eingeschichtet ist; und
Bilden der flexiblen Modifikatorkomponente aus dem mehrschichtigen flexiblen Modifikatormaterial.

## Revendications

1. Structure de semelle (103) pour un article de chaussures (100), comportant :
un composant de semelle extérieure (106) constitué d'un premier matériau de moule, le composant de semelle extérieure ayant une surface exposée, conçue pour venir en prise avec une surface de sol, et une surface intérieure opposée à la surface exposée ; et
un composant modificateur de flexion (208) ayant un corps de forme généralement rectangulaire (220) ayant une première largeur (408) et une portion étendue (222) ayant une seconde largeur (412), dans laquelle la seconde largeur est inférieure à la première largeur, le composant modificateur de flexion étant constitué d'un matériau de fibre et d'un second matériau de moule, le composant modificateur de flexion étant co-moulé avec le composant de semelle extérieure, de sorte qu'une surface supérieure du composant modificateur de flexion soit sensiblement continue avec la surface intérieure du composant de semelle extérieure ou affleurant celle-ci.

2. Structure de semelle selon la revendication 1, dans laquelle le composant modificateur de flexion a une construction multi-couche qui inclut au moins une première couche (303, 304) de matériau de fibre.

3. Structure de semelle selon la revendication 2, dans laquelle :
(i) la au moins une première couche de matériau de fibre inclut un matériau de tissu en fibre non tissé ; ou
(ii) la au moins une première couche de matériau de fibre inclut un matériau de tissu en fibre non tissé assemblé par fusion.

4. Structure de semelle selon la revendication 2, dans laquelle la au moins une première couche de matériau de fibre est imprégnée d'un matériau polymère.

5. Structure de semelle selon la revendication 4, dans laquelle :
(1) le matériau polymère est compatible en moulage avec le premier matériau de moule du composant de semelle extérieure ; ou
(2) le matériau polymère est un matériau polymère revêtu de styrène.

6. Structure de semelle selon la revendication 2, dans laquelle :
(1) la construction multi-couche inclut un film extrudé thermofusible ;
(2) la construction multi-couche inclut un film extrudé thermofusible (302) enserré entre des couches de matériau de fibre ; ou
(3) la construction multi-couche inclut un film thermoplastique extrudé thermofusible enserré entre des couches de matériau de tissu en fibre non tissé assemblé par fusion imprégné d'un polymère revêtu de styrène.

7. Structure de semelle selon la revendication 1, dans laquelle le composant modificateur de flexion est co-moulé avec le composant de semelle extérieure, de sorte que le second matériau de moule du composant modificateur de flexion fonde ou se mélange avec le premier matériau de moule du composant de semelle extérieure pour créer une liaison chimique et mécanique.

8. Structure de semelle selon la revendication 1, dans laquelle le composant de semelle extérieure a une première configuration, le composant modificateur de flexion a une seconde configuration et le composant modificateur de flexion est disposé à un emplacement du composant de semelle extérieure sélectionné, de sorte que la seconde configuration du composant modificateur de flexion coopère avec la première configuration du composant de semelle extérieure pour modifier une caractéristique de flexion du composant de semelle extérieure, sensiblement uniquement à l'emplacement sélectionné du composant de semelle extérieure.

9. Structure de semelle selon la revendication 8, dans laquelle la seconde configuration du composant modificateur de flexion inclut une tige allongée qui s'étend à travers une région de milieu de pied (112) de la structure de semelle, généralement d'une région de talon (110) à une région d'avant-pied (114) de la structure de semelle.

10. Structure de semelle selon la revendication 9, dans laquelle la première configuration du composant de semelle extérieure inclut une pluralité d'éléments de traction agencés selon un motif et la tige allongée a au moins une portion étendue qui s'étend au sein d'une région située entre la pluralité d'éléments de traction de la première configuration du composant de semelle extérieure.

11. Structure de semelle selon la revendication 1, dans laquelle le composant de semelle extérieure a une première configuration incluant une pluralité d'éléments de traction agencés dans une région d'avant-pied et une région de talon du composant de semelle extérieure, le composant modificateur de flexion a une seconde configuration incluant une tige allongée qui s'étend à travers une région de milieu de pied du composant de semelle extérieure, généralement de la région de talon à la région d'avant-pied du composant de semelle extérieure, et le composant modificateur de flexion est disposé à un emplacement du composant de semelle extérieure sélectionné, de sorte que la seconde configuration du composant modificateur de flexion coopère avec la première configuration du composant de semelle extérieure pour modifier une caractéristique de flexion du composant de semelle extérieure, sensiblement uniquement à l'emplacement sélectionné du composant de semelle extérieure d'une zone qui inclut la pluralité d'éléments de traction.

12. Article de chaussures (100) comportant :
une tige (102) ; et
une structure de semelle (103) associée à la tige, la structure de semelle incluant :
un composant de semelle extérieure (106) constitué d'un premier matériau de moule, le composant de semelle extérieure ayant une surface exposée, conçue pour venir en prise avec une surface de sol, et une surface intérieure opposée à la surface exposée ; et
un composant modificateur de flexion (208) ayant un corps de forme généralement rectangulaire (220) ayant une première largeur (408) et une portion étendue (222) ayant une seconde largeur (412), dans lequel la seconde largeur est inférieure à la première largeur, le composant modificateur de flexion étant constitué d'un matériau de fibre et d'un second matériau de moule, le composant modificateur de flexion étant co-moulé avec le composant de semelle extérieure, de sorte qu'une surface supérieure du composant modificateur de flexion soit sensiblement continue avec la surface intérieure du composant de semelle extérieure ou affleurant celle-ci.

13. Article de chaussures selon la revendication 12, dans lequel la structure de semelle inclut en outre un composant de semelle intermédiaire (104) disposé entre la tige et le composant de semelle extérieure avec le composant modificateur de flexion co-moulé.

14. Procédé de fabrication d'une structure de semelle (103) pour un article de chaussures (100), comportant :
la disposition d'une découpe de composant de semelle extérieure (620) d'un premier matériau de moule dans une cavité de moule (606) d'un système de moulage qui est conçu pour correspondre avec un composant de semelle extérieure de la structure de semelle (103) ;
la disposition d'un composant modificateur de flexion (622) ayant un corps de forme généralement rectangulaire ayant une première largeur et une portion étendue ayant une seconde largeur, dans lequel la seconde largeur est inférieure à la première largeur, le composant modificateur de flexion incluant un matériau de fibre et un second matériau de moule sur une surface supérieure exposée de la découpe de composant de semelle extérieure ; et
le co-moulage de la découpe de composant de semelle extérieure et du composant modificateur de flexion dans le système de moulage pour former le composant de semelle extérieure avec une surface supérieure du composant modificateur de flexion co-moulé sensiblement continue avec une surface intérieure du composant de semelle extérieure ou affleurant celle-ci.

15. Procédé selon la revendication 14 comportant en outre :
la préparation d'un matériau modificateur de flexion multi-couche incluant un film thermoplastique extrudé thermofusible enserré entre un matériau de tissu en fibre non tissé assemblé par fusion imprégné d'un polymère revêtu de styrène ; et
la formation du composant modificateur de flexion à partir du matériau modificateur de flexion multi-couche.
